# EUROPEAN PATENT SPECIFICATION

(11) **EP 4 489 386 B1**
(45) Date of publication and mention of the grant of the patent: **06.05.2026**
(21) Application number: 23884389.0
(22) Date of filing: 21.08.2023
(51) Int. Cl.: H04M 1/72484, H04M 1/58, H04M 1/72454, H04M 19/04, H04R 3/12, H04R 7/04, H04M 1/247

(54) **CALL CONTROL METHOD, ELECTRONIC DEVICE AND STORAGE MEDIUM**
ANRUFSTEUERUNGSVERFAHREN, ELEKTRONISCHE VORRICHTUNG UND SPEICHERMEDIUM
PROCÉDÉ DE COMMANDE D'APPEL, DISPOSITIF ÉLECTRONIQUE ET SUPPORT DE STOCKAGE

(30) Priority: 31.10.2022 CN 202211350598
(43) Date of publication of application: 08.01.2025
(73) Proprietor: Honor Device Co., Ltd., Shenzhen, Guangdong 518040 (CN)
(72) Inventor: CHEN, Jiazi, Shenzhen, Guangdong 518040 (CN); ZHAO, Songwei, Shenzhen, Guangdong 518040 (CN)
(74) Representative: Isarpatent
(86) International application number: PCT/CN2023/114009
(87) International publication number: WO 2024/093452

(56) References cited:
- WO-A1-2017/080524
- CN-A- 108 958 631
- CN-A- 109 032 557
- CN-A- 109 462 799
- CN-A- 114 466 097
- CN-A- 114 866 639
- JP-A- 2018 110 370

## Description

Priority is claimed to Chinese Patent Application No. 202211350598.8, filed with the China National Intellectual Property Administration on October 31, 2022 and entitled "CALL CONTROL METHOD, ELECTRONIC DEVICE, AND STORAGE MEDIUM".

### TECHNICAL FIELD

This disclosure generally relates to the field of electronic technologies, and the invention in particular relates to a call control method.

### BACKGROUND

Currently, for most mobile phones, sound production in voice communication of a mobile phone is implemented through a receiver arranged at the top of the mobile phone. Generally, a sound output hole needs to be correspondingly arranged on the mobile phone at a position of the receiver, to release energy generated during sound production of the receiver. The sound output hole is usually provided on a front panel of the mobile phone. With the development of large-screen and full-screen mobile phones, for some full-screen mobile phones, a sound output hole is designed into the form of a long slit, and is located at a joint between a middle frame of the mobile phone and a front panel of the mobile phone. In addition, to ensure that an external sound output area is large enough to have a good sound output effect, for some full-screen mobile phones, an opening is further added at the top of a middle frame as a sound output hole.

However, when a user holds a mobile phone to perform on-ear listening (for example, in a voice call scenario), voice output through a receiver is emitted not only from a sound output hole at a side slit, and a large part of energy is emitted from a sound output hole at the top. Therefore, sounds emitted from the sound output holes not only can be heard by the user, but also can be heard by another user in a quiet environment. Consequently, sound leakage is caused, and user privacy leakage is prone to occur.

The technical problem addressed in CN 114 466 097 A is the issue of sound leakage in mobile terminals (such as smartphones) during sound output, particularly as device designs move toward higher screen-to-body ratios. As the screen size increases and bezels shrink, the traditional sound output hole (earpiece) is forced closer to the edge or even onto a curved surface, making it less aligned with the user's ear during calls. This misalignment results in sound being leaked into the environment, reducing privacy and sound quality for the user. The document solves this problem by introducing a new mobile terminal structure and sound output method that includes a screen sound production component disposed on the back side of the screen (typically in the upper half), which can drive the screen to vibrate and produce sound. Multiple sound output modes, including a "privacy mode" where the screen sound production component is used to generate sound close to the user's ear, minimizing leakage. The system can automatically switch between modes (privacy, earpiece, play) based on environmental conditions, user proximity, ambient noise, and user actions, ensuring that sound is delivered in a way that maximizes privacy and sound quality while minimizing leakage.

### SUMMARY

The invention is directed to the call control method of claim 1. Advantageous embodiments are set out in the dependent claims.

The object of the present invention is to provide a call control method, to resolve a problem of sound leakage when playing voice through a receiver in a scenario in which a user holds a mobile phone to perform on-ear listening. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

To achieve the foregoing objective, the following technical solutions are used in this application.

According to a first aspect according to the invention, the invention provides a call control method, applied to an electronic device, where the electronic device includes a receiver, a screen, and a screen sound production apparatus, the screen sound production apparatus is configured to drive the screen to perform screen sound production, and the call control method includes:
receiving, by the electronic device, a first incoming call when a call volume set by a system of the electronic device is a first volume;
receiving, by the electronic device, a first operation by a user, and answering the first incoming call in response to the first operation, and emitting, by the receiver and the screen sound production apparatus of the electronic device, a first sound at a first ratio and at the first volume;
receiving, by the electronic device during the first incoming call, a second operation by the user, and emitting, by the receiver and the screen sound production apparatus, a second sound at a second ratio and at a second volume in response to the second operation, where the second volume is greater than the first volume;
receiving, by the electronic device, a third operation by the user, and ending the first incoming call in response to the third operation;
receiving, by the electronic device, a second incoming call when the call volume set by the system of the electronic device is the second volume; and
receiving, by the electronic device, a fourth operation by the user, and answering the second incoming call in response to the fourth operation, and emitting, by the receiver and the screen sound production apparatus of the electronic device, a third sound at a third ratio and at a third volume, where the third volume is greater than the first volume, and the third volume is less than the second volume, where
the first ratio is different from the second ratio, and the third ratio is different from the second ratio.

Through the solution provided in embodiments of this application, when an incoming call is answered, if a system call volume is low, the system call volume can be maintained, and a privacy call mode is entered, which not only can minimize sound leakage, but also can satisfy use habits of a user. If the system call volume is high, the volume is automatically reduced, and the privacy call mode is entered, to reduce sound leakage. Therefore, in this solution of this application, an answering volume can be automatically adjusted to a proper volume based on the system call volume before the answering, to satisfy call needs of the user and improve the call experience of the user.

It should be noted that descriptions are provided herein by using an incoming call scenario as an example. It may be understood that, during actual implementation, the call control method provided in embodiments of this application can also be applied to an outgoing call scenario.

The call control method provided in embodiments of this application is briefly described herein by using an example.

First, the electronic device receives an incoming call notification and displays an incoming call notification interface. Prompt information "Smart privacy call mode" is displayed in the incoming call notification interface, indicating that a smart privacy call function has been enabled by default, and voice can be output in "Smart privacy call mode" once an incoming call is answered.

Then, in response to an answering operation by the user, the electronic device answers the incoming call, and the receiver and the screen sound production apparatus of the electronic device may emit sounds at a first ratio and at a level-6 volume, and in this case, the electronic device is in the privacy call mode. For example, the first ratio is 3:7. It should be noted that, that the receiver and the screen sound production apparatus of the electronic device emit the sounds at the first ratio and at the level-6 volume means that the receiver and the screen sound production apparatus emit the sounds together, and a total volume of the sounds emitted by the two is the level-6 volume. In the total volume, a proportion of sound intensity of the receiver is 3, and a proportion of sound intensity of the screen sound production apparatus is 7.

Then, the electronic device receives a volume up operation by the user. Correspondingly, the electronic device increases the volume, for example, increases the volume to a level 10 (or a level 9). In this case, the receiver and the screen sound production apparatus of the electronic device emit sounds at a second ratio and at a level-10 volume, and in this case, the privacy call mode is exited. The second ratio is greater than the first ratio. For example, the second ratio is 7: 3. It should be noted that, that the receiver and the screen sound production apparatus of the electronic device emit the sounds at the second ratio and at the level-10 volume means that the receiver and the screen sound production apparatus emit the sounds together, and a total volume of the sounds emitted by the two is the level-10 volume. In the total volume, a proportion of sound intensity of the receiver is 7, and a proportion of sound intensity of the screen sound production apparatus is 3.

Then, the electronic device receives a call ending operation by the user, and ends the current call. The electronic device receives an incoming call notification again and displays an incoming call notification interface. Likewise, the prompt information "Smart privacy call mode" is displayed in the incoming call notification interface, indicating that the smart privacy call function has been enabled by default, and voice can be output in "Smart privacy call mode" once an incoming call is answered.

Then, in response to an answering operation by the user, the electronic device answers the incoming call, and the receiver and the screen sound production apparatus of the electronic device emit sounds at a third ratio and at a level-8 volume, and in this case, the electronic device is in the privacy call mode. The third ratio is less than the second ratio. In addition, the third ratio may be the same as or different from the first ratio. For example, the third ratio may be 4:6. It should be noted that, that the receiver and the screen sound production apparatus of the electronic device emit the sounds at the third ratio and at the level-8 volume means that the receiver and the screen sound production apparatus emit the sounds together, and a total volume of the sounds emitted by the two is the level-8 volume. In the total volume, a proportion of sound intensity of the receiver is 4, and a proportion of sound intensity of the screen sound production apparatus is 6.

In some possible implementations, after the emitting, by the receiver and the screen sound production apparatus of the electronic device, a third sound at a third ratio and at a third volume, the method further includes: emitting, by the receiver and the screen sound production apparatus of the electronic device, the third sound at the third ratio and at the third volume when a magnitude of an ambient sound in which the electronic device is located is a first value; and emitting, by the receiver and the screen sound production apparatus of the electronic device, a fourth sound at a fourth ratio and at a fourth volume when the magnitude of the ambient sound in which the electronic device is located is a second value, where the first value is less than the second value, the third ratio is different from the fourth ratio, and the third volume is less than the fourth volume.

Through this solution of this application, during the call, mode switching can be automatically performed based on a magnitude of an ambient sound, that is, in a quiet environment, the privacy call mode is automatically switched to, and the volume is automatically reduced, to minimize sound leakage; and in a noisy environment, the normal mode is automatically switched to, and the volume is automatically increased, to ensure call intelligibility. Therefore, mode switching can be implemented based on actual use needs in an automatic adjustment manner provided in this application, to satisfy demands of user calls in various scenarios and improve the call experience of the user.

According to the invention, the first ratio, the second ratio, the third ratio are respectively ratio values of the sound intensity of the receiver to the sound intensity of the screen sound production apparatus, where the first ratio is less than the second ratio, and the third ratio is less than the second ratio.

In some possible implementations, before the receiving, by the electronic device, a first incoming call, the method further includes: enabling a first function by default after the electronic device is powered on, where when the first function is enabled, the sound intensity of the receiver is less than the sound intensity of the screen sound production apparatus after an incoming call or an outgoing call is answered.

In some possible implementations, the second operation is an operation of pressing a physical volume up button by the user or an operation of dragging a volume adjustment button in a volume bar icon upward by the user.

In some possible implementations, an output volume of the electronic device is represented by a volume decibel value; or the output volume of the electronic device is represented by a volume level, where volume decibel values within a preset range are divided into N volume levels, the N volume levels are in a one-to-one correspondence with N decibel values, and N is a positive integer.

In some possible implementations, the N volume levels include a volume level 1 to a volume level 10, where volume levels respectively corresponding to the first volume and the third volume fall within a range of [level 1, level I], and volumes respectively corresponding to the second volume and the fourth volume fall within a range of [level I+1, level 10], where I is an integer greater than 1 and less than 10.

In some possible implementations, a value of I is set to 8.

According to a second aspect, the method of the invention according to the first aspect can also comprise the following implementation steps:
enabling, by the electronic device, a first function in response to an operation of double-pressing a volume down button by a user, where the first function is that sound intensity of the receiver is less than sound intensity of the screen sound production apparatus; and
enabling, by the electronic device, the first function in response to an operation of double-pressing the volume down button by the user.

As explained above, according to the invention of the first aspect, the first ratio, the second ratio, the third ratio are respectively ratio values of the sound intensity of the receiver to the sound intensity of the screen sound production apparatus, where the first ratio is less than the second ratio, and the third ratio is less than the second ratio.

In some possible implementations, the receiving, by the electronic device, a first incoming call includes: displaying, by the electronic device, an incoming call notification interface; and displaying, by the electronic device, first prompt information in the incoming call notification interface when the incoming call is not answered, where the first prompt information prompts to trigger, by double-pressing the volume down button, to enable the first function.

In some possible implementations, the receiving, after the enabling the first function, the method further includes: displaying, by the electronic device, second prompt information in the incoming call notification interface, where the second prompt information prompts that the first function has been enabled.

In some possible implementations, the method further includes: silencing, by the electronic device, an incoming call ringtone in response to an operation of double-pressing the volume down button by the user.

In some possible implementations, the method further includes: receiving, by the electronic device, a third incoming call; silencing, by the electronic device, an incoming call ringtone in response to receiving an operation of pressing the volume down button by the user; and
displaying, by the electronic device, a volume bar icon in the incoming call notification interface in response to an operation of pressing the volume down button again by the user, where the volume bar icon represents the call volume set by the system of the electronic device.

In some possible implementations, after the displaying, by the electronic device, a volume bar icon in the incoming call notification interface, the method further includes: adjusting, by the electronic device, the call volume in response to an operation by the user on the volume bar icon; and enabling the first function when the adjusted volume is a first call volume; or disabling the first function when the adjusted volume is a second call volume, where the first call volume is less than the second call volume.

In some possible implementations, the method further includes: receiving, by the electronic device, a fourth incoming call when the first function is disabled; displaying, by the electronic device, a call interface in response to that the call is answered; and displaying the volume bar icon in the call interface and presenting an animation guide and a textual prompt, where the animation guide includes a downward movement of a volume adjustment button in the volume bar icon, and the textual prompt prompts to trigger, through a volume down operation, to enable the first function.

In some possible implementations, the method further includes: displaying, by the electronic device, a switch icon of a first function in an incoming call notification interface, an outgoing call interface, or a call interface; enabling, by the electronic device, the first function in response to receiving a tap operation by the user on the switch icon; and disabling, by the electronic device, the first function in response to receiving a tap operation by the user on the switch icon again.

According to a third but not claimed aspect, this application provides a call control apparatus, including units configured to perform the method in the first aspect or the second aspect. The apparatus may correspondingly perform the method described in the first aspect or the second aspect. For related descriptions of the units in the apparatus, refer to the descriptions in the first aspect or the second aspect. For brevity, details are not described herein again.

The method described in the first aspect or the second aspect may be implemented by hardware, or may be implemented by hardware executing corresponding software. The hardware or the software includes one or more modules or units corresponding to the foregoing functions, for example, a processing module or unit, and a display module or unit.

According to a fourth but not claimed aspect, this application provides an electronic device. The electronic device includes a processor, and the processor is coupled to a memory. The memory is configured to store a computer program or instructions, and the processor is configured to execute the computer program or the instructions stored in the memory, so that the method in the first aspect or the second aspect is performed. For example, the processor is configured to execute the computer program or the instructions stored in the memory, to enable the apparatus to perform the method in the first aspect or the second aspect.

According to a fifth but not claimed aspect, this application provides a computer-readable storage medium, having a computer program (which may also be referred to as instructions or code), configured to implement the method according to the first aspect or the second aspect, stored therein. For example, when the computer program is executed by a computer, the computer is enabled to perform the method in the first aspect or the second aspect.

According to a sixth but not claimed aspect, this application provides a chip, including a processor. The processor is configured to read and execute a computer program stored in a memory, to perform the method in any one of the first aspect or the second aspect and the possible implementations of the first aspect or the second aspect. Optionally, the chip further includes a memory, and the memory is connected to the processor by a circuit or a wire.

According to a seventh but not claimed aspect, this application provides a chip system, including a processor. The processor is configured to read and execute a computer program stored in a memory, to perform the method in any one of the first aspect or the second aspect and the possible implementations of the first aspect or the second aspect. Optionally, the chip system further includes a memory, and the memory is connected to the processor by a circuit or a wire.

According to an eighth but not claimed aspect, this application provides a computer program product. The computer program product includes a computer program (also referred to as instructions or code), and the computer program, when executed by a computer, enables the computer to implement the method in the first aspect or the second aspect.

It may be understood that for beneficial effects of the second aspect to the eighth aspect, reference may be made to the related descriptions in the first aspect. Details are not described herein.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1 is a schematic diagram of a structure of an electronic device on which a receiver and a sound output hole are arranged;
FIG. 2 is a schematic diagram of a structure of an electronic device on which a receiver and a screen vibration apparatus are arranged according to an embodiment of this application;
FIG. 3 is a schematic diagram of a structure of an electronic device according to an embodiment of this application;
FIG. 4 is a schematic diagram of a software architecture of an electronic device according to an embodiment of this application;
FIG. 5 is a schematic diagram 1 of an interface of a call control method applied to an electronic device according to an embodiment of this application;
FIG. 6 is a schematic diagram 2 of an interface of a call control method applied to an electronic device according to an embodiment of this application;
FIG. 7 is a schematic diagram 3 of an interface of a call control method applied to an electronic device according to an embodiment of this application;
FIG. 8 is a schematic diagram 4 of an interface of a call control method applied to an electronic device according to an embodiment of this application;
FIG. 9 is a schematic diagram of volume level division in a call control method according to an embodiment of this application;
FIG. 10 is a schematic diagram of a volume bar in a call control method according to an embodiment of this application;
FIG. 11 is a schematic diagram 1 of an interface of application of a call control method according to an embodiment of this application;
FIG. 12 is a schematic diagram 2 of an interface of application of a call control method according to an embodiment of this application;
FIG. 13 is a schematic timing diagram of a call control method according to an embodiment of this application;
FIG. 14 is a schematic diagram 3 of an interface of application of a call control method according to an embodiment of this application;
FIG. 15 is a schematic diagram 4 of an interface of application of a call control method according to an embodiment of this application;
FIG. 16A and FIG. 16B are another schematic timing diagram of a call control method according to an embodiment of this application;
FIG. 17 is a schematic diagram 5 of an interface of application of a call control method according to an embodiment of this application;
FIG. 18 is a schematic diagram 6 of an interface of application of a call control method according to an embodiment of this application;
FIG. 19 is a schematic diagram 7 of an interface of application of a call control method according to an embodiment of this application;
FIG. 20 is a schematic diagram 8 of an interface of application of a call control method according to an embodiment of this application;
FIG. 21 is a schematic diagram 9 of an interface of application of a call control method according to an embodiment of this application;
FIG. 22 is still another schematic timing diagram of a call control method according to an embodiment of this application;
FIG. 23 is a schematic diagram 10 of an interface of application of a call control method according to an embodiment of this application;
FIG. 24 is a schematic diagram 11 of an interface of application of a call control method according to an embodiment of this application;
FIG. 25 is a schematic diagram 12 of an interface of application of a call control method according to an embodiment of this application;
FIG. 26 is a schematic diagram 13 of an interface of application of a call control method according to an embodiment of this application;
FIG. 27 is a schematic diagram 14 of an interface of application of a call control method according to an embodiment of this application;
FIG. 28 is a schematic diagram 15 of an interface of application of a call control method according to an embodiment of this application;
FIG. 29 is a schematic diagram 16 of an interface of application of a call control method according to an embodiment of this application;
FIG. 30 is a schematic diagram 17 of an interface of application of a call control method according to an embodiment of this application; and
FIG. 31 is a schematic flowchart of prompting in a call control method according to an embodiment of this application.

### DESCRIPTION OF EMBODIMENTS

To make the objectives, technical solutions, and advantages of embodiments of this application clearer, the following clearly and completely describes the technical solutions in embodiments of this application with reference to the accompanying drawings in embodiments of this application. Apparently, the described embodiments are some of embodiments of this application rather than all of the embodiments. All other embodiments obtained by a person of ordinary skill in the art based on embodiments of this application without creative efforts shall fall within the protection scope of this application.

Currently, for most mobile phones, sound production in voice communication of a mobile phone is implemented through a receiver arranged at the top of the mobile phone. Generally, a sound output hole needs to be correspondingly arranged on the mobile phone at a position of the receiver, to release energy generated during sound production of the receiver. The sound output hole is usually provided on a front panel of the mobile phone. However, with the continuous development of mobile phones, to provide a user with a better screen viewing experience, a screen-to-body ratio of a screen of a mobile phone is increasingly high. Because the sound output hole arranged on the front panel occupies a partial region of the front panel of the mobile phone, a width of a frame of the mobile phone is increased, which affects a further increase in the screen-to-body ratio of the screen of the mobile phone.

Therefore, with the development of large-screen and full-screen mobile phones, to reduce an area occupied on a front panel of a mobile phone by a sound output hole of a receiver (also referred to as a receiver) configured to perform sound production during a call in voice communication, to further increase the screen-to-body ratio of the screen, for some full-screen mobile phones, a sound output hole is designed into the form of a long slit, and is located at a joint between a middle frame of the mobile phone and a front panel of the mobile phone. In addition, to ensure that an external sound output area is large enough to have a good sound output effect, for some full-screen mobile phones, an opening is further added at the top of a middle frame as a sound output hole.

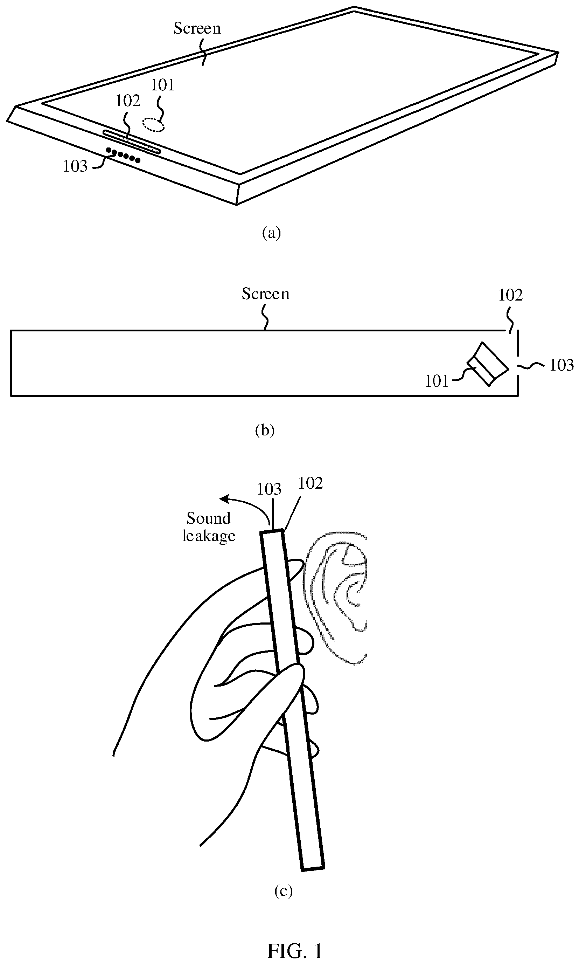

For example, FIG. 1 shows a schematic diagram of a structure of a mobile phone. As shown in FIG. 1, the mobile phone may include a front panel (usually including a screen and a frame) configured for arranging a screen, and a rear panel and a middle frame that are configured to support an internal circuit. The front panel, the rear panel, and the middle frame can form a housing structure through enclosure. As shown in (a) in FIG. 1, a receiver 101 (that is, a speaker, also referred to as a receiver, configured to perform sound production during a call in voice communication) is arranged at a position at the top in the housing structure (that is, a top position of the mobile phone). Corresponding to the receiver 101, the mobile phone is provided with two sound output holes (for example, a sound output hole 102 and a sound output hole 103). A sound of the receiver 101 may be emitted from the sound output hole. With reference to (b) in FIG. 1, (b) in FIG. 1 is a cross-sectional view of a structure of a mobile phone. The sound output hole 102 is at a joint (that is, a position of a side slit) between the front panel and the middle frame of the mobile phone. The sound output hole 103 is at a position that is on the middle frame of the mobile phone and that is close to the receiver 101 (that is, a top position of the middle frame of the mobile phone).

However, for the sound output hole arranged in this manner, when a user normally uses the mobile phone to perform voice communication, an auricle of the user cannot completely cover the sound output hole. As a result, sound leakage occurs when sound energy of a speaker comes out from the sound output hole arranged at the top of the middle frame of the mobile phone. (c) in FIG. 1 shows a schematic diagram of a scenario in which a user performs voice communication through a mobile phone. As shown in (c) in FIG. 1, when the user holds the mobile phone for voice communication through the receiver, the receiver of the mobile phone is close to an ear (or an auricle) of the user. Because the sound output hole of the receiver of the mobile phone (such as the sound output hole 102 in the side slit of the mobile phone and the sound output hole 103 at the top of the middle frame) cannot be completely covered by the ear of the user, sounds emitted from the sound output holes not only can be heard by the user, but also can be heard by another user in a quiet environment.

To resolve the foregoing problems, embodiments of this application provide a call control method. The method may be applied to an electronic device having a voice communication function. For example, the call control method may be applied to a scenario in which a user performs on-ear listening through the foregoing electronic device, for example, the user performs voice communication through the receiver or listens to a voice message in an instant messaging application through the receiver. According to the invention, the electronic device may include a display (also referred to as a screen), a screen sound production apparatus (that is, an apparatus that can perform sound production through screen vibration), a receiver (that is, the speaker, also referred to as a receiver, configured to perform sound production during a call in voice communication), and a sound output hole arranged corresponding to the receiver.

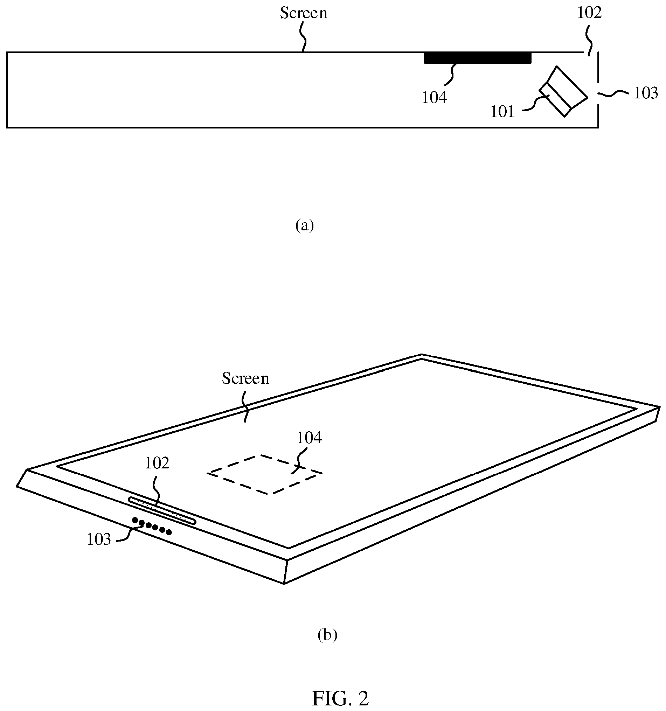

For example, FIG. 2 is a schematic diagram of a structure of an electronic device according to an embodiment of this application. As shown in (a) in FIG. 2 and (b) in FIG. 2, in addition to the receiver 101, the sound output hole 102, and the sound output hole 103 shown in FIG. 1, a screen sound production apparatus 104 connected to the screen is further arranged on the electronic device. For example, the screen sound production apparatus 104 is a vibration source (also referred to as an exciter) connected to the screen. The exciter causes the screen to vibrate, and implement sound production through the screen. The screen sound production apparatus 104 is arranged in the housing structure of the electronic device.

It should be noted that, in embodiments of this application, a voice output mode (also referred to as a listening mode) of the electronic device may include a privacy call mode (privacy mode, PVM), a normal mode, and a speaker mode. The privacy call mode may also be referred to as a smart privacy mode, a smart privacy call mode, or a PVM mode. The normal mode may also be referred to as a normal (normal) mode.

In some embodiments, after the electronic device enables the privacy call mode, the electronic device may output voice by combining a screen sound production manner and a receiver sound production manner. For example, voice output intensity (for example, 70%) corresponding to the screen sound production manner is greater than or equal to voice output intensity (for example, 30%) corresponding to the receiver sound production manner. In other words, the mobile phone may play voice simultaneously by using screen sound production as a main manner and receiver sound production as an auxiliary manner.

In some other embodiments, after the electronic device enables the privacy call mode, the electronic device may also output voice in only the screen sound production manner. It may be understood that the receiver does not perform sound production in this case.

It should be noted that during actual implementation, in the privacy call mode, specifically, it may be determined, based on actual use needs, whether the voice is output in the screen sound production manner or the voice is output by using screen sound production as a main manner and receiver sound production as an auxiliary manner, which is not limited in embodiments of this application.

In some embodiments, after the electronic device enables the normal mode, the electronic device may output voice by combining the receiver sound production manner and the screen sound production manner. For example, voice output intensity (for example, 70%) corresponding to the receiver sound production manner is greater than or equal to voice output intensity (for example, 30%) corresponding to the screen sound production manner. The mobile phone may play voice simultaneously by using the receiver sound production as a main manner and the screen sound production as an auxiliary manner.

In some other embodiments, after the electronic device enables the normal mode, the electronic device may also output voice in only the receiver sound production manner. It may be understood that the screen does not perform sound production in this case.

It should be noted that during actual implementation, in the normal mode, specifically, it may be determined, based on actual use needs, whether the voice is output in the receiver sound production manner or the voice is output by using receiver sound production as a main manner and screen sound production as an auxiliary manner, which is not limited in embodiments of this application.

In some embodiments, when it is switched from the privacy call mode to the normal mode, an overall sound volume (or loudness or intensity) may also be increased based on a volume corresponding to the privacy call mode, to improve a voice playback effect. In other words, overall sound loudness of sounds produced through the receiver and the screen in the normal mode is greater than overall sound loudness of sounds produced through the receiver and the screen in the privacy call mode.

Compared with the receiver sound production manner, the screen sound production manner can effectively prevent sound leakage during a voice call. Therefore, when the user makes or answers a call in a quiet environment, the user usually expects to minimize sound leakage. In this case, the privacy call mode may be used, which can minimize sound leakage while ensuring a clear call, thereby protecting user privacy.

In some embodiments, after the electronic device enables the speaker mode, the electronic device outputs voice through a speaker (also referred to as a loudspeaker). It may be understood that neither the receiver nor the screen performs sound production in this case.

It should be noted that in response to an operation by the user on the electronic device, the electronic device may control a voice output manner to switch between the privacy call mode, the normal mode, and the speaker mode. A specific switching trigger condition and a switching process are described below in detail.

In some embodiments, the electronic device may preset the privacy call mode to be in a default enabled state. In this way, when the electronic device makes a call or answers an incoming call, the privacy call mode is automatically enabled, to avoid sound leakage without requiring an operation by the user, thereby improving the user experience.

In some embodiments, when a call is made or an incoming call is answered, an output volume after the current call is answered is automatically adjusted to a proper volume level based on a system call volume (which is specifically a volume level), to ensure call privacy and call intelligibility.

In some embodiments, during a call, when a current volume level is an adjustable volume level, mode switching can be automatically performed based on a magnitude of an ambient sound, that is, in a quiet environment, the privacy call mode is automatically switched to, and the volume is automatically reduced, to minimize sound leakage; and in a noisy environment, the normal mode is automatically switched to, and the volume is automatically increased, to ensure call intelligibility. Such a manner may be referred to as an automatic adjustment mode.

In some embodiments, when the privacy call mode is not enabled, an operation manner of how the user enables the privacy call mode is prompted in the incoming call notification interface. For example, upon an incoming call notification, the privacy call mode may be enabled or entered by double-pressing a volume down button. Alternatively, upon the incoming call notification, if the user presses the volume down button, a ring tone of the incoming call notification is silenced. If the user presses the volume down button again, the electronic device may display a volume bar on the incoming call notification interface. In this way, the user may adjust an answering volume in advance when receiving the incoming call notification. Such a manner is different from the current manner in which the answering volume can be adjusted only after the incoming call is answered. Such a manner may be referred to as a manual adjustment mode.

In some embodiments, during a call, the electronic device may exit or enter the privacy call mode based on an operation of adjusting the volume bar by the user. For example, the electronic device may exit the privacy call mode in response to an operation of raising the volume bar by the user. The electronic device may switch to (or enter) the privacy call mode again in response to an operation of lowering the volume bar by the user. It may be understood that such a manner is also a manual adjustment mode.

For example, when an operation of decreasing a volume or increasing a volume by a user is received, if it is determined that an adjusted volume level is lower than or equal to a preset volume level (for example, a volume level 8), the privacy call mode is enabled. For example, sound production may be simultaneously performed through a screen and a receiver, and the two sound production manners may be controlled for sound production at different volume intensity (for example, sound intensity of the screen is greater than or equal to sound intensity of the receiver), to avoid sound leakage, protect call privacy of the user, and improve the call experience of the user. If it is determined that the adjusted volume level is greater than the preset volume level, the normal mode is enabled. For example, sound production may be simultaneously performed through the screen and the receiver, and the two sound production manners may be controlled for sound production at different volume intensity (for example, sound intensity of the receiver is greater than sound intensity of the screen), to ensure a good voice output effect and improve the call experience of the user.

In the call control method provided in embodiments of this application, when an incoming call is answered, an answering volume can be automatically adjusted to a proper volume based on a system call volume, and a privacy call mode is enabled; in addition, during the call, mode switching can be automatically performed based on a magnitude of an ambient sound, that is, in a quiet environment, the privacy call mode is automatically switched to, and the volume is automatically reduced, to minimize sound leakage; in a noisy environment, the normal mode is automatically switched to, and the volume is automatically increased, to ensure call intelligibility; and during a call, switching may also be performed between the privacy call mode and the normal mode based on actual needs of a user in response to a manual trigger operation by the user. Therefore, this application can satisfy demands of user calls in various scenarios.

With reference to the accompanying drawings, the following first describes an electronic device to which the call control method provided in embodiments of this application is applied.

For example, the electronic device in embodiments of this application may be a device that has a voice communication function, such as a mobile phone, a tablet computer, an ultra-mobile personal computer (ultra-mobile personal computer, UMPC), a netbook, a cellular phone, a personal digital assistant (personal digital assistant, PDA), or a wearable device (such as a smartwatch or a smart band). A specific form of the electronic device is not specifically limited in embodiments of this application.

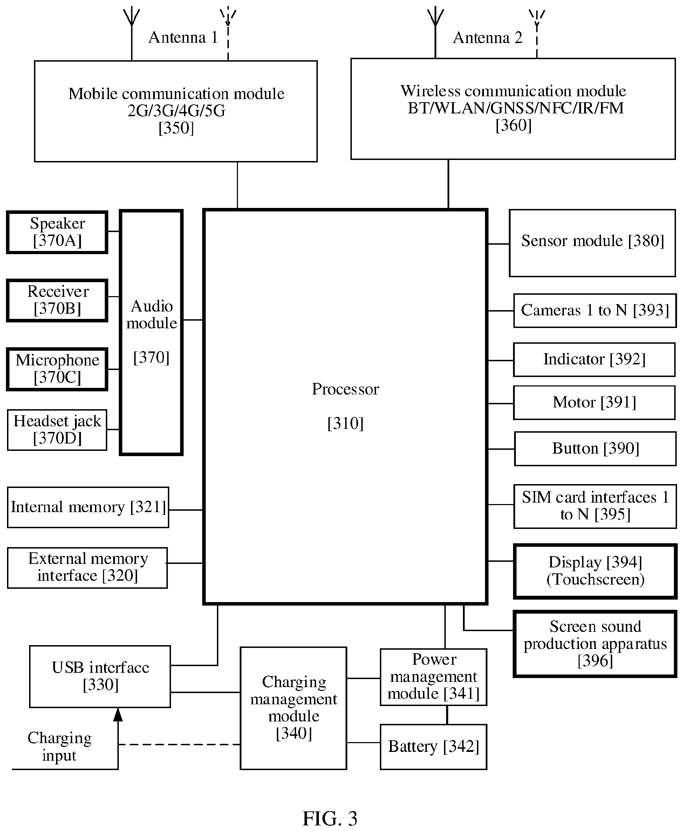

For example, the electronic device is a mobile phone. FIG. 3 is a schematic diagram of a structure of another electronic device according to an embodiment of this application. In other words, for example, the electronic device shown in FIG. 3 may be a mobile phone.

As shown in FIG. 3, the mobile phone may include a processor 310, an external memory interface 320, an internal memory 321, a universal serial bus (universal serial bus, USB) interface 330, a charging management module 340, a power management module 341, a battery 342, an antenna 1, an antenna 2, a mobile communication module 350, a wireless communication module 360, an audio module 370, a speaker 370A, a receiver (that is, a receiver) 370B, a microphone 370C, a headset jack 370D, a sensor module 380, a button 390, a motor 391, an indicator 392, a camera 393, a display 394, a subscriber identity module (subscriber identification module, SIM) card interface 395, a screen sound production apparatus 396, and the like.

The sensor module may include a sensor such as a pressure sensor, a gyroscope sensor, a barometric pressure sensor, a magnetic sensor, an acceleration sensor, a distance sensor, an optical proximity sensor, a fingerprint sensor, a temperature sensor, and a touch sensor, an ambient light sensor, and a bone conduction sensor. In embodiments of this application, the electronic device may detect, by using a sensor such as the optical proximity sensor (that is, a light sensor) or the distance sensor, whether an ear of the user is close to the receiver. For example, the electronic device may detect, by using the distance sensor, whether there is an obstruction in front of a front panel (or a screen) of the mobile phone, and detect a distance between the obstruction and the screen, to determine whether the ear of the user is currently close to the receiver.

It may be understood that the structure illustrated in this embodiment does not constitute a specific limitation on the mobile phone. In some other embodiments, the mobile phone may include more or fewer components than those shown in the figure, or some components may be combined, or some components may be split, or components are arranged in different manners. The components in the figure may be implemented by hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate devices, or may be integrated into one or more processors.

The controller may be a neural center and command center of the mobile phone. The controller may generate an operation control signal based on an instruction operation code and a timing signal, and read an instruction and control execution of the instruction.

A memory may also be arranged in the processor 310, and is configured to store instructions and data. In some embodiments, the memory in processor 310 is a cache memory. The memory may store an instruction or data that is recently used or to be cyclically used by the processor 310. If the processor 310 needs to use the instructions or the data again, the processor 310 may directly call the instructions or the data from the memory. Repeated access is avoided, and a waiting time for the processor 310 is reduced, thereby improving system efficiency.

In some embodiments, the processor 310 may include one or more interfaces. The interface may include an integrated circuit (inter-integrated circuit, I2C) interface, an integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules illustrated in this embodiment is merely an example for description and does not constitute a limitation on the structure of the mobile phone. In some other embodiments, the mobile phone may also use an interface connection manner different from that in the foregoing embodiment, or use a combination of a plurality of interface connection manners.

In this embodiment of this application, the electronic device may determine, by using the processor 310, a category of a listening environment in which the electronic device is currently located; and then separately adjust, based on the category, a frequency band in which the receiver performs sound production and a frequency band in which the screen performs sound production, to control the receiver and the screen to perform sound production, to respectively play sounds in corresponding frequency bands in a sound signal, to avoid sound leakage of the electronic device when a human ear listens to a sound in a quiet environment.

The charging management module 340 is configured to receive a charging input from a charger (for example, a wireless charger or a wired charger) to charge the battery 342. The power management module 341 is configured to connect to the battery 342, the charge management module 340, and the processor 310. The power management module 341 receives an input of the battery 342 and/or an input of the charging management module 340, to supply power to the components in the electronic device.

A wireless communication function of the mobile phone may be implemented through the antenna 1, the antenna 2, the mobile communication module 350, the wireless communication module 360, the modem processor, the baseband processor, and the like.

The antenna 1 and the antenna 2 are configured to transmit and receive electromagnetic wave signals. Each antenna in the mobile phone may be configured to cover one or more communication bands. Different antennas may be multiplexed to improve antenna utilization. For example, the antenna 1 may be multiplexed as a diversity antenna in a wireless local area network. In some other embodiments, the antennas may be used in combination with a tuning switch.

In some embodiments, in the mobile phone, the antenna 1 is coupled to the mobile communication module 350, and the antenna 2 is coupled to the wireless communication module 360, so that the mobile phone may communicate with a network and another device by using a wireless communication technology. The mobile communication module 350 may provide a solution, applied to the mobile phone, to wireless communication including 2G, 3G, 4G, 5G, and the like. The mobile communication module 350 may include at least one filter, a switch, a power amplifier, and a low noise amplifier (low noise amplifier, LNA). The mobile communication module 350 may receive an electromagnetic wave by using the antenna 1, perform processing such as filtering and amplification on the received electromagnetic wave, and transmit the electromagnetic wave to the modem processor for demodulation.

The mobile communication module 350 may further amplify a signal modulated by the modem processor, convert an amplified signal into an electromagnetic wave by using the antenna 1 for radiation. In some embodiments, at least some functional modules in the mobile communication module 350 may be arranged in the processor 310. In some embodiments, at least some of the function modules of the mobile communication module 350 and at least some of modules of the processor 310 may be arranged in a same component.

The wireless communication module 360 may provide a solution, applied to the mobile phone, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like.

The wireless communication module 360 may be one or more devices that integrate at least one communication processing module. The wireless communication module 360 receives an electromagnetic wave through the antenna 2, modulates and filters an electromagnetic wave signal, and sends a processed signal to the processor 310. The wireless communication module 360 may also receive a to-be-sent signal from the processor 310, perform frequency modulation and amplification on the to-be-sent signal, and convert the signal into an electromagnetic wave for radiation through the antenna 2.

Certainly, the wireless communication module 360 may also support the mobile phone in performing voice communication. For example, the mobile phone may access a Wi-Fi network through the wireless communication module 360, and then interact with another device by using any application that can provide a voice communication service, to provide a user with the voice communication service. For example, the application that can provide the voice communication service may be an instant messaging application.

The mobile phone may implement a display function through the GPU, the display 394, the application processor, and the like. The GPU is an image processing microprocessor and is connected to the display 394 and the application processor. The GPU is configured to perform mathematical and geometric calculation for graphics rendering. The processor 310 may include one or more GPUs, and the GPU executes a program instruction to generate or change display information. The display 394 is configured to display an image, a video, or the like.

The mobile phone may implement a photographing function through the ISP, the camera 393, the video codec, the GPU, the display 394, the application processor, and the like. The ISP is configured to process data fed back by the camera 393. In some embodiments, the ISP may be arranged in the camera 393. The camera 393 is configured to capture a static image or a video. In some embodiments, the mobile phone may include 1 or N cameras 393, and N is a positive integer greater than 1.

The external memory interface 320 may be configured to connect an external storage card, for example, a micro SD card, to extend a storage capability of the mobile phone. The internal memory 321 may be configured to store computer executable program code, and the executable program code includes instructions. The processor 310 runs the instruction stored in the internal memory 321, to perform various function applications and data processing of the mobile phone. For example, in embodiments of this application, the processor 310 may execute the instructions stored in the internal memory 321. The internal memory 321 may include a program storage region and a data storage region.

The mobile phone may implement an audio function, for example, music playback and recording, through the audio module 370, the speaker 370A, the receiver (that is, the receiver) 370B, the microphone 370C, the headset interface 370D, the application processor, and the like.

The audio module 370 is configured to convert a digital audio signal into an analog audio signal for output, and is further configured to convert an analog audio input into a digital audio signal. The audio module 370 may further be configured to code and decode the audio signal. In some embodiments, the audio module 370 may be arranged in the processor 310 or some functional modules in the audio module 370 may be arranged in the processor 310. The speaker 370A, also referred to as a "loudspeaker", is configured to convert an electrical audio signal into a sound signal. The receiver 370B, also referred to as a "receiver", is configured to convert an electrical audio signal into a sound signal. The microphone 370C, also referred to as a "mike" or a "mic", is configured to convert a sound signal into an electrical signal. The headset jack 370D is configured to be connected to a wired headset. The headset jack 370D may be a USB interface 330, or may be a 3.5 mm open mobile electronic device platform (open mobile terminal platform, OMTP) standard interface or cellular telecommunications industry association of the USA (cellular telecommunications industry association of the USA, CTIA) standard interface.

Specifically, in embodiments of this application, the receiver 370B (that is, the "receiver") may include a receiver 101 and/or the screen sound production apparatus 104 shown in (a) in FIG. 2.

For example, in embodiments of this application, the audio module 370 may convert electrical audio signals received by the mobile communication module 350 and the wireless communication module 360 into sound signals. The telephone receiver (that is, the "receiver") 370B of the audio module 370 plays the sound signal, and the screen sound production apparatus 396 drives the screen (that is, the display) to perform screen sound production to play the sound signal.

For example, in embodiments of this application, the electronic device may detect, by using the microphone 370C, sound intensity of an ambient sound in an environment in which the electronic device is currently located, so that the processor 310 determines, based on the detected sound intensity of the ambient sound, the category of the listening environment in which the electronic device is currently located.

The button 390 includes a power on/off button, a volume button, and the like. The motor 391 may generate a vibration prompt. The indicator 392 may be an indicator light, and may indicate a charging status and a battery level change, or may indicate a message, a missed call, a notification, and the like. The SIM card interface 395 is configured to connect to a SIM card. The mobile phone may support 1 or N SIM card interfaces, where N is a positive integer greater than 1.

The foregoing specifically describes embodiments of this application by using an electronic device 100 as an example. It should be understood that a structure shown in embodiments of this application does not constitute a specific limitation on the electronic device 100. The electronic device 100 may have more or fewer components than those shown in the figure, or may combine two or more components, or may have different component configurations. Various components shown in a figure may be implemented in hardware, software, or in a combination of hardware and software that includes one or more signal processing and/or application-specific integrated circuits.

The electronic device provided in embodiments of this application may be user equipment (user equipment, UE), such as a mobile terminal (for example, a user mobile phone), a tablet computer, a desktop computer, a laptop computer, a handheld computer, a netbook, or a personal digital assistant (personal digital assistant, PDA).

In addition, an operating system is run on the foregoing hardware. The operating system at the operating system layer may be any one or more computer operating systems that implement service processing through a process (process), for example, a Linux operating system, a Unix operating system, an Android operating system, an iOS operating system, or a Windows operating system. An application may be installed and run on the operating system.

An operating system of the electronic device 100 may use a layered architecture, an event-driven architecture, a microkernel architecture, a microservice architecture, or a cloud architecture. In embodiments of this application, the software structure of the electronic device 100 is described by using an Android system with a layered architecture as an example.

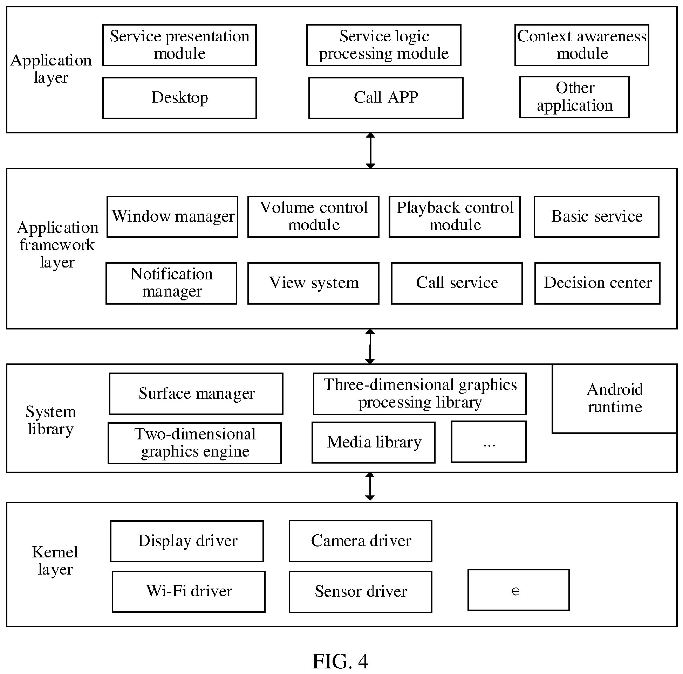

FIG. 4 is a block diagram of the software structure of the electronic device 100 according to an embodiment of this application.

In a layered architecture, software is divided into several layers, and each layer has a clear role and task. The layers communicate with each other through a software interface. In some embodiments, the Android system may be sequentially divided into four layers from top to bottom: an application (applications) layer, an application framework (application framework) layer, an Android runtime (Android runtime) and system library, and a kernel (kernel) layer.

The application layer may include a series of application packages. The application layer may include applications (the application may be referred to as an APP for short) such as a camera APP, a gallery APP, a calendar APP, a map APP, a navigation APP, WLAN, Bluetooth, a music APP, a video APP, a short messaging service APP, and a sports and health APP. This is not limited in embodiments of this application.

Applications in the application layer may be divided into system applications and non-system applications. The system applications may specifically include a call APP and a desktop APP, a system user interface (SystemUI), and the like, and the non-system applications may include a game APP, a map APP, a short video APP, a social APP, a shopping APP, and the like.

In embodiments of this application, the application layer may further include a context awareness module, a service logic processing module, a service presentation module, and the like. The context awareness module, the service logic processing module, and the service presentation module may be independent APPs, or may be separately integrated into different APPs, or may be integrated into a same APP, which is not limited in this application.

The context awareness module is resident or runs in a form of low power consumption, and has a capability of perceiving an external fact or an environment. The context awareness module may detect a related event and obtain a state of the event from another application at the application layer, the application framework layer, the system layer, or the kernel layer through an application programming interface (application programming interface, API), such as detecting a Bluetooth connection or a network connection, monitoring a short messaging service message of a user, or customizing a timer. In embodiments of this application, a main function of the context awareness module is to monitor whether there is an incoming call event. The context awareness module may be further configured to obtain a volume level when the last call is ended. In addition, the context awareness module may also detect whether there is an operation of answering an incoming call. The context awareness module may also obtain a magnitude of an ambient sound. The context awareness module is further configured to monitor a volume down button (volume - button) pressing (that is, pressing or double-pressing) event triggered by a user. The context awareness module may notify the service logic processing module of monitored information.

The service logic processing module (for example, a computing engine) has a service logic processing capability and is configured to perform data processing or logic determining based on the information monitored by the context awareness module and a preset logic algorithm, to implement call volume adjustment and mode switching. For example, the service logic processing module receives the incoming call event and the system call volume, and determines whether volume adjustment and mode switching conditions are satisfied, to determine whether to adjust the volume and switch the mode. The service logic processing module may further determine that an incoming call has been answered based on an operation of answering the incoming call, and further determine, based on the ambient sound, whether the volume adjustment and mode switching conditions are satisfied, to determine whether to adjust the volume and switch the mode. A specific determining process is described below in detail.

The service presentation module (for example, YOYO Suggestions) is configured to display a volume bar and a change of the volume bar on a screen of a mobile phone according to an instruction from the service logic processing module, and display a switched mode after the mode is switched, for example, display that a smart privacy call mode or a privacy call mode has been enabled when the privacy call mode is enabled. For example, the service presentation module receives a volume bar display command sent by the service logic processing module, and notifies a window manager of displaying the volume bar on the electronic device. In addition, the service presentation module may also present a magnitude of and a change of a volume within the volume bar. The magnitude of the volume is measured by a volume level, which is specifically described below in detail. In addition, the service presentation module may also display a volume bar and a volume change in a call interface based on an event of pressing a volume down button triggered by a user.

The application framework layer provides an application programming interface (application programming interface, API) and a programming framework for applications at the application layer. The application framework layer includes some predefined functions. As shown in FIG. 4, the application framework layer may include a call manager, a window manager, a content provider, a view system, a resource manager, a notification manager, an activity manager, and the like, which is not limited in embodiments of this application.

The call manager is configured to manage a call state of a mobile phone, obtain phone information (for example, device information, subscriber identification card information, and network information), and intercept a phone status (for example, a call-state service status and a signal strength status), and may invoke a phone dialer to make a call.

The view system includes visual controls, for example, a control for displaying text and a control for displaying a picture. The view system may be configured to construct an application. A display interface may include one or more views. For example, in embodiments of this application, the view system may be configured to display an incoming call notification interface and a call interface in a desktop.

The notification manager enables an application to display notification information in a status bar, and may be configured to convey a notification-type message. The displayed notification information may automatically disappear after a short stay without user interaction. For example, the notification manager is configured to notify that a smart privacy call and the like have been enabled for a current call. For example, textual information, a privacy call icon, or the like is prompted in an incoming call notification interface, a call interface, or a drop-down menu bar.

The window manager is configured to manage a window program. The window manager may obtain a size of a display as well as a size and shape of a volume bar, and determine whether the size, the shape, and the like of the volume bar need to be adjusted.

The activity manager is configured to manage lifecycles of applications and a navigation fallback function, and is responsible for main thread creation of Android and maintenance of the lifecycles of the applications.

The resource manager provides various resources, such as a localized character string, an icon, a picture, a layout file, and a video file, for an application.

The Android runtime includes a kernel library and a virtual machine. The Android runtime is responsible for scheduling and managing the Android system.

The kernel library includes two parts: One part is a functional function that needs to be invoked by a Java language, and the other part is a kernel library of Android.

The application layer and the application framework layer are run in the virtual machine. The virtual machine executes Java files of the application layer and the application framework layer as binary files. The virtual machine is configured to implement functions such as object lifecycle management, stack management, thread management, security and abnormality management, and garbage collection.

The system library may include a plurality of functional modules, such as a surface manager (surface manager), a media library (media libraries), a three-dimensional graphics processing library (for example, OpenGL ES), and a two-dimensional graphics engine (for example, SGL). The surface manager is configured to manage a display subsystem, and provide fusion of two-dimensional and three-dimensional layers for a plurality of applications.

The kernel layer is a layer between hardware and software. The kernel layer includes at least a display driver, a camera driver, an audio driver, and a sensor driver.

It should be noted that although the Android system is used as an example for description in embodiments of this application, a basic principle thereof is also applicable to an electronic device based on an operating system such as iOS or Windows.

The call control method provided in embodiments of this application may be performed by the foregoing electronic device, or may be performed by a functional module and/or a functional entity that are in the electronic device and that can implement the call control method. In addition, the solutions of this application can be implemented by hardware and/or software, which may be specifically determined based on actual use needs and is not limited in embodiments of this application. By using the electronic device as an example, the call control method provided in embodiments of this application is illustrated below with reference to the accompanying drawings.

With reference to the accompanying drawings, the following describes embodiments of this application by using a plurality of illustrative embodiments. Methods in the following embodiments may all be implemented in an electronic device having the foregoing hardware structure and software architecture. The diagram of the hardware structure of the electronic device may be shown in FIG. 3, and the block diagram of the software structure of the electronic device may be shown in FIG. 4, which, however, are not limited in embodiments of this application. For ease of description, in embodiments of this application, that the electronic device is the mobile phone shown in FIG. 3 is used as an example.

Embodiments of this application provide a call control method. When an incoming call is answered, an answering volume can be automatically adjusted to a proper volume level based on a call volume set by a system (which is referred to as a system call volume for short and may be specifically a volume level), and a privacy call mode is enabled; in addition, during the call, mode switching can be automatically performed based on a magnitude of an ambient sound, that is, in a quiet environment, the privacy call mode is automatically switched to, and the volume is automatically reduced, to minimize sound leakage; in a noisy environment, the normal mode is automatically switched to, and the volume is automatically increased, to ensure call intelligibility; and during a call, switching may also be performed between the privacy call mode and the normal mode based on actual needs of a user in response to a manual trigger operation by the user. Therefore, the solutions of this application can satisfy demands of user calls in various scenarios.

The audio control method provided in embodiments of this application may be applied to a voice call scenario. For example, the voice call scenario may be an incoming call scenario of receiving a call, or a call scenario after an incoming call is answered, or an outgoing call scenario after a call is made, or a call scenario after an outgoing call is answered. Certainly, it may also be any other possible voice call scenario, which is not limited in embodiments of this application. For ease of description, interfaces used in the foregoing various voice call scenarios are collectively referred to as a voice call interface or a call interface.

In embodiments of this application, the electronic device enables a smart privacy call function by default. After the smart privacy call function is enabled, the privacy call mode may be directly enabled in a voice call scenario, or may be enabled in a voice call scenario when a volume value of the electronic device is less than or equal to a preset volume level (for example, a volume level 8), which may be specifically determined based on actual use needs and is not limited in embodiments of this application.

As described above, the privacy call mode may output voice by combining the screen sound production manner with the receiver sound production manner. Optionally, voice output intensity corresponding to the screen sound production manner is greater than or equal to voice output intensity corresponding to the receiver sound production manner. Alternatively, in the privacy call mode, voice may be output in only the screen sound production manner. Compared with the receiver sound production manner, the screen sound production manner can effectively prevent sound leakage during a voice call. Therefore, when the user makes or answers a call in a quiet environment, the user usually expects to minimize sound leakage. In this case, the privacy call mode may be used, which can minimize sound leakage while ensuring a clear call, thereby protecting user privacy.

In some embodiments, when the electronic device answers a call, the privacy call mode corresponding to the smart privacy call function may be enabled by default, and related prompt information indicating that the smart privacy call function has been enabled is displayed in an incoming call notification interface. Optionally, the prompt information may be a text, an icon, or a combination of a text and an icon.

In some embodiments, after the smart privacy call function is enabled, an introduction to the smart privacy call function (for example, minimizing sound leakage and protecting privacy while ensuring a clear call) may be displayed in a bubble box on the voice call interface each time the receiver is used to make or answer a call. Operation manners, such as "Smart privacy call has been enabled" and/or "Get closer to this region to hear more clearly", may also be displayed in a specific region (that is, a screen sound production region). By using the prompt information, the smart privacy call function is introduced, and the user is guided to use the smart privacy call function.

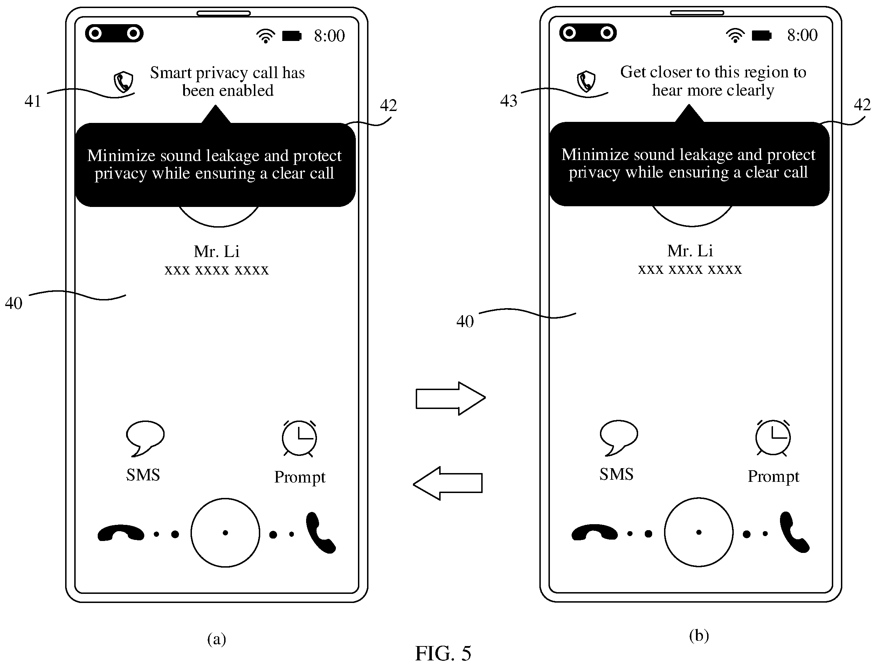

For example, using the incoming call scenario as an example, FIG. 5 shows a schematic diagram of an incoming call notification interface. As shown in (a) in FIG. 5, the following prompt information is displayed in an incoming call notification interface 40: "Smart privacy call has been enabled" 41 and "Minimize sound leakage and protect privacy while ensuring a clear call" 42 (located in a bubble box). As shown in (b) in FIG. 5, the following prompt information is displayed in the incoming call notification interface 40: "Get closer to this region to hear more clearly" 43 and "Minimize sound leakage and protect privacy while ensuring a clear call" 42. The prompt information all prompts that the privacy call mode has been enabled. In the incoming call notification interface 40, "Smart privacy call has been enabled" 41 and "Get closer to this region to hear more clearly" 43 may be alternately displayed (that is, carousel). In this way, the user may know the smart privacy call function faster and learn to use the function, thereby improving the human-machine interaction experience.

It should be noted that the prompt information herein is illustrative, and specific content, a display position, a display quantity, a display size, a display style, and the like of the prompt information may be determined based on actual use needs, which is not limited in embodiments of this application.

Optionally, the foregoing prompt information may be displayed on a voice call interface in the first N call scenarios (for example, a value of N is 3) after the smart privacy call function is enabled, to guide the user to use the smart privacy call function and cancel the display in a subsequent call scenario. For example, in the voice call interface, display of the introduction to the smart privacy call function, such as "Minimize sound leakage and protect privacy while ensuring a clear call" 42, may be canceled.

In some embodiments, when the user taps any position in the voice call interface (including an answer button), the display of the introduction information of the smart privacy call function in the voice call interface is canceled, for example, the bubble box corresponding to "Minimize sound leakage and protect privacy while ensuring a clear call" 42 disappears.

In some embodiments, "Smart privacy call has been enabled" may be a resident prompt in the voice call interface. In other words, when the user taps any position in the voice call interface (including the answer button), the prompt information indicating "Smart privacy call has been enabled" may be kept displayed.

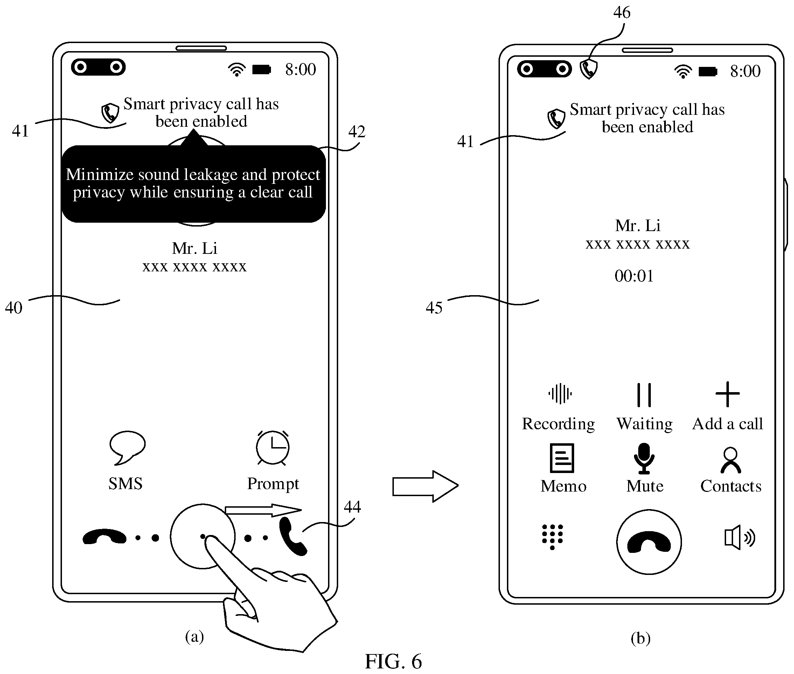

For example, using the call scenario after an incoming call is answered as an example, FIG. 6 shows a schematic diagram of an incoming call notification interface and a voice call interface after a call is answered. As shown in (a) in FIG. 6, the user taps an answer button 44 in the incoming call notification interface 40 to answer a call. As shown in (b) in FIG. 6, in response to an operation performed by the user on the answer button 44, the incoming call notification interface 40 is switched to a voice call interface 45 for display. The following prompt information is displayed in the voice call interface 45: "Smart privacy call has been enabled" 41 and an icon 46 identifying a privacy call. In (b) in FIG. 6, the bubble box corresponding to "Minimize sound leakage and protect privacy while ensuring a clear call" shown in (a) in FIG. 6 disappears.

In some embodiments, in a case that the smart privacy call function is enabled, when the user pulls down a menu bar, a notification card indicating that a voice call is in progress and a notification card indicating that the smart privacy call function has been enabled are displayed in the menu bar.

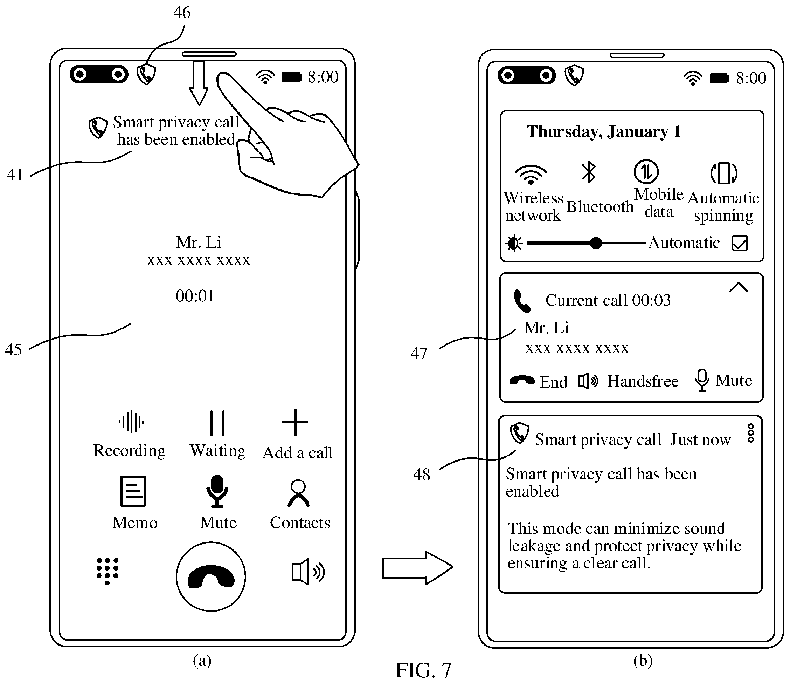

For example, FIG. 7 shows a schematic diagram of a notification card about a smart privacy call function displayed in a menu bar. As shown in (a) in FIG. 7, the user slides a finger down in a direction of an arrow on the voice call interface 46 to pull down the menu bar. As shown in (b) in FIG. 7, the menu bar (also referred to as a notification interface or a notification center) is displayed. The menu bar displays a notification card 47 and a notification card 48. The notification card 47 indicates that a voice call is in progress, and the notification card 48 indicates that the smart privacy call function has been enabled.

These notification cards help the user to better learn an application scenario and an application effect of the smart privacy call function, thereby improving the user experience.

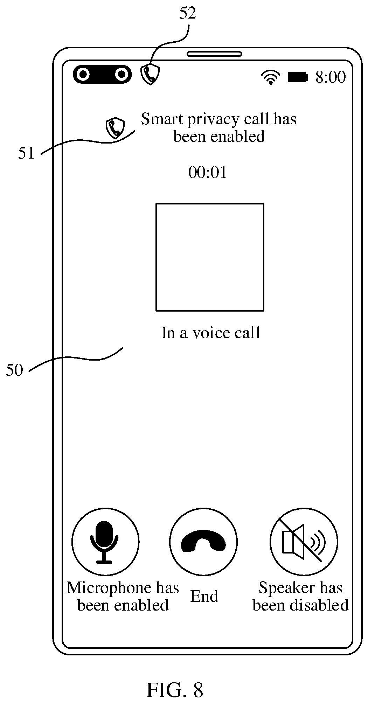

In some embodiments, the call control method provided in embodiments of this application is also applicable to voice over Internet protocol (voice over Internet protocol, VoIP). For example, FIG. 8 shows a schematic diagram of an interface of a call scenario of a VoIP phone. As shown in FIG. 8, "Smart privacy call has been enabled" 51 is displayed on a VoIP call interface 50, and an icon 52 identifying a privacy call prompts that voice output is implemented in a privacy call mode in a current call scenario.

Possible manners of enabling the privacy call mode and display effects of the voice call interface after the privacy call mode is enabled are described above. Possible implementations of the privacy call mode in actual use are described below in detail with reference to interfaces.

It should be noted that in the foregoing embodiment, the incoming call scenario and the call scenario after an incoming call is answered are used as examples for illustrative descriptions. It may be understood that during actual implementation, the call control method provided in embodiments of this application is also applicable to an outgoing call scenario and a call scenario after an outgoing call is answered. For detailed descriptions related to the smart privacy call function, refer to the detailed descriptions related to the smart privacy call function in the foregoing incoming call scenario and the call scenario after an incoming call is answered. Details are not described herein again.

It should also be noted that the call control method provided in embodiments of this application is also applicable to a scenario of playing voice messages, for example, some social applications support receiving or sending voice messages. The foregoing smart privacy call function may also be applied when the voice messages are played, to avoid sound leakage during playback of the voice messages.

It should further be noted that the call control method provided in embodiments of this application is also applicable to a scenario of playing recording. For example, the smart privacy call function provided in embodiments of this application may also be applied when the recording is played, to avoid sound leakage during playback of the recording.

It should also be noted that since in a video call scenario, there is no need for on-ear listening, the smart privacy call function may not be enabled in the video call scenario.

It may be understood that the call control method provided in embodiments of this application may be applied to various scenarios in which a user needs to perform on-ear listening through an electronic device, which is not limited in embodiments of this application.

A volume level division manner, volume bar forms corresponding to levels, and a mode correspondence included in the privacy call mode in embodiments of this application are first illustrated below with reference to the accompanying drawings.

In some embodiments, the electronic device may divide different volumes into 10 levels, including levels 1 to 10. Volume values corresponding to the levels 1 to 10 increase level by level. The volume values may be expressed in decibels (dB). A quantity of divided volume levels and a volume value or a volume range corresponding to each level may be determined based on actual use needs, which is not limited in embodiments of this application.

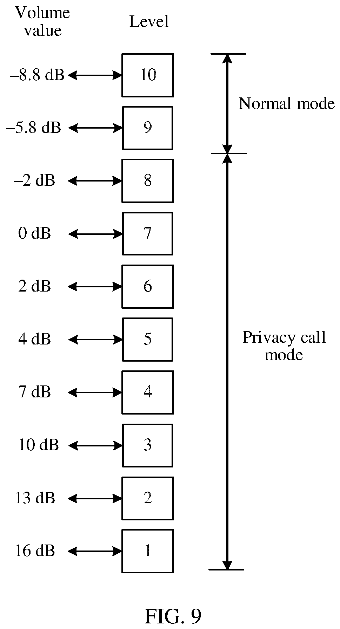

In embodiments of this application, modes corresponding to volume levels are set based on actual situations in this application. FIG. 9 shows a schematic diagram of volume level division and a mapping relationship between volume levels and volume values. For example, as shown in FIG. 9, the volume levels may be divided into a level 1 to a level 10. Optionally, a volume level range [level 1, level 8] is corresponding to the privacy call mode, and a volume level range [level 9, level 10] is corresponding to the normal mode. That is, if a volume level falls within the volume level range [level 1, level 8], voice is output in the privacy call mode during a call. If the volume level falls within the volume range [level 9, level 10], voice is output in the normal mode during the call. For example, the volume values corresponding to the level 1 to the level 10 respectively are 16 dB, 13 dB, 10 dB, 7 dB, 4 dB, 2 dB, 0 dB, -2 dB, -5.8 dB, and -8.8 dB. 0 dB may be understood as a reference volume, 16 dB, 13 dB, 10 dB, 7 dB, 4 dB, and 2 dB may be understood respectively as decrements based on 0 dB, and -2 dB, -5.8 dB, and -8.8 dB may be understood respectively as increments based on 0 dB. Certainly, the respective volume levels may also be corresponding to other volume values.

It should be noted that the mapping relationship between the volume levels and the volume values is illustrated herein. It may be understood that during actual implementation, the volume values corresponding to the volume levels may be set based on actual use needs, which is not limited in embodiments of this application.

In embodiments of this application, regardless of whether the electronic device is in the privacy call mode or in the normal mode, the receiver and the screen sound production apparatus may both be used to perform sound production simultaneously.

In embodiments of this application, the screen sound production apparatus is responsible for outputting high-frequency sounds, and the receiver is responsible for outputting medium, low-frequency sounds.

In some embodiments, in different modes, the receiver and the screen sound production apparatus may perform sound production respectively at different sound intensity ratios.

For example, after the electronic device enables the privacy call mode, the electronic device may play voice simultaneously by using screen sound production as a main manner and receiver sound production as an auxiliary manner. Voice output intensity (for example, 70%) corresponding to the screen sound production manner is greater than or equal to voice output intensity (for example, 30%) corresponding to the receiver sound production manner.

In another example, when the electronic device is in the normal mode, the electronic device may play voice simultaneously by using receiver sound production as a main manner and screen sound production as an auxiliary manner. Voice output intensity (for example, 70%) corresponding to the receiver sound production manner is greater than or equal to voice output intensity (for example, 30%) corresponding to the screen sound production manner.

In some embodiments, for different volume levels in a same mode, the receiver and the screen sound production apparatus may perform sound production respectively at different sound intensity ratios. For example, within a range [level 1, level 8], different sound intensity ratios may be set for the receiver and the screen sound production apparatus.

It may be understood that, during actual implementation, for different volume levels in a same mode, a same sound intensity ratio may also be set for the receiver and the screen sound production apparatus. This may be specifically determined based on actual use needs, and is not limited in embodiments of this application. For ease of description, for different volume levels in a same mode, illustrative descriptions are provided below by using a same sound intensity ratio as an example. For example, when the system volume level falls within the range [level 1, level 8], the sound intensity ratio of the receiver to the screen sound production apparatus is a first ratio (for example, 3: 7). When the system volume level falls within the range [level 9, level 10], the sound intensity ratio of the receiver to the screen sound production apparatus is a second ratio (for example, 7:3). The second ratio is greater than the first ratio.

It should also be noted that the foregoing illustrative descriptions are provided by using an example in which the volume level changes from the level 8 to the level 9, and the volume level changes from the level 9 to the level 8. During actual implementation, it is not limited to performing mode switching between the level 8 and the level 9, which may be set based on actual needs. For example, during actual implementation, it may also be set in advance that when the volume level falls within a volume level range [level 1, level 6], the privacy call mode is enabled. When the volume level falls within a volume range [level 7, level 10], the normal mode is enabled. In this case, the volume level changes from the level 6 to the level 7, which may trigger to switch from the privacy call mode to the normal mode. Alternatively, the volume level changes from the level 7 to the level 6, which may trigger to switch from the privacy call mode to the normal mode.

It should also be noted that in embodiments of this application, illustrative descriptions are provided by using an example in which switching between the normal mode and the privacy call mode is triggered based on a change of the volume level. For example, the normal mode is switched to when the volume level is greater than a volume level threshold. The privacy call mode is switched to when the volume level is less than or equal to the volume level threshold. It may be understood that during actual implementation, switching between the normal mode and the privacy call mode may also be triggered based on a change of the volume value. For example, the normal mode is switched to when the volume value (for example, a decibel value) is greater than a volume threshold (for example, a decibel threshold). The privacy call mode is switched to when the volume value is less than or equal to the volume threshold. Which of the foregoing manners is used may be specifically determined based on actual use needs, and is not limited in embodiments of this application.

In embodiments of this application, a magnitude of the volume value may be represented in the form of a volume bar. Possible forms of the volume bar corresponding to the volume levels in embodiments of this application are described below based on the foregoing example of the volume level division.

For example, volume levels of different magnitudes are distinguished by fillers with different lengths in the volume bar. For example, a longer filler in the volume bar indicates a higher volume level. In this case, voice is output at a higher volume. When the volume bar is filled up, corresponding to the level 10, it indicates that a maximum volume is reached. When the volume bar is not filled, it indicates mute.

Optionally, a display form, a display color, a display length, and the like of the volume bar in the normal mode and the privacy call mode are not limited in embodiments of this application.

In embodiments of this application, the privacy call mode and the normal mode may be represented by different icons for distinction. Specifically, an icon for identifying a call mode can be determined based on actual use needs in terms of a display position, a display size, and a display form, and is not limited in embodiments of this application. Optionally, the icon for identifying a call mode may be displayed below or above the volume bar.

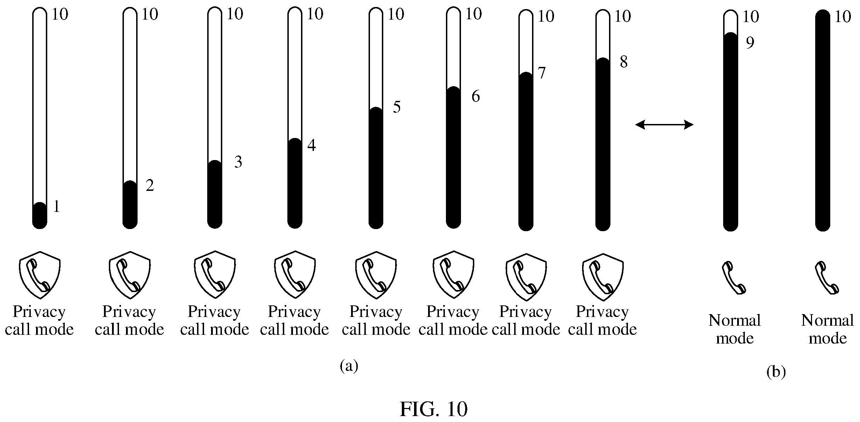

For example, FIG. 10 is a schematic diagram of a volume bar corresponding to the volume levels shown in FIG. 9. A schematic diagram of volume bars of the level 1 to the level 8 is shown in (a) in FIG. 10. Volume levels 1 to 8 are all corresponding to the privacy call mode. A schematic diagram of volume bars of the level 9 and the level 10 is shown in (b) in FIG. 10. Volume levels 9 and 10 are both corresponding to the normal mode.

In some embodiments, during switching between the privacy call mode and the normal mode, when a filling amount of the volume bar changes, the icon of the call mode also correspondingly changes to prompt the user that the call mode is switched, thereby improving the user experience.

In some embodiments, during switching between the privacy call mode and the normal mode, the electronic device may prompt the user by displaying specific prompt information.

In some embodiments, during switching between the privacy call mode and the normal mode, the electronic device may vibrate to prompt the user, to improve the user experience.

In the call control method provided in embodiments of this application, when an incoming call is answered, an answering volume can be automatically adjusted to a proper volume level based on a system call volume level, and a privacy call mode is enabled; in addition, during the call, mode switching can be automatically performed based on a magnitude of an ambient sound, that is, in a quiet environment, the privacy call mode is automatically switched to, and the volume is automatically reduced, to minimize sound leakage; in a noisy environment, the normal mode is automatically switched to, and the volume is automatically increased, to ensure call intelligibility; and during a call, switching may be performed between the privacy call mode and the normal mode based on actual needs of a user in response to a manual trigger operation by the user. Therefore, mode switching can be implemented based on actual use needs in an automatic adjustment manner and a manual adjustment manner provided in this application, to satisfy demands of user calls in various scenarios.

For switching between the privacy call mode and the normal mode, embodiments of this application provide an automatic adjustment mode and a manual adjustment mode. The call control method provided in embodiments of this application is described below based on the foregoing basis, such as the volume level division, the volume bar, and the mode correspondence, with reference to specific embodiments.

### First embodiment: Automatic adjustment manner

In this embodiment of this application, in an incoming call scenario, the electronic device obtains a call volume set by the system (which is referred to as a system call volume for short), and then determines, based on a magnitude of the system call volume, whether to automatically adjust the volume and whether to perform mode adjustment between the privacy call mode and the normal mode. The system call volume may be a call volume when the last call is ended, or a volume after a user performs adjustment on "Call volume" in a "Sound and vibration" settings interface. The system call volume may be specifically measured by a volume level. For example, the system call volume may be a volume of a specific level ranging from a volume level 1 to a volume level 10.

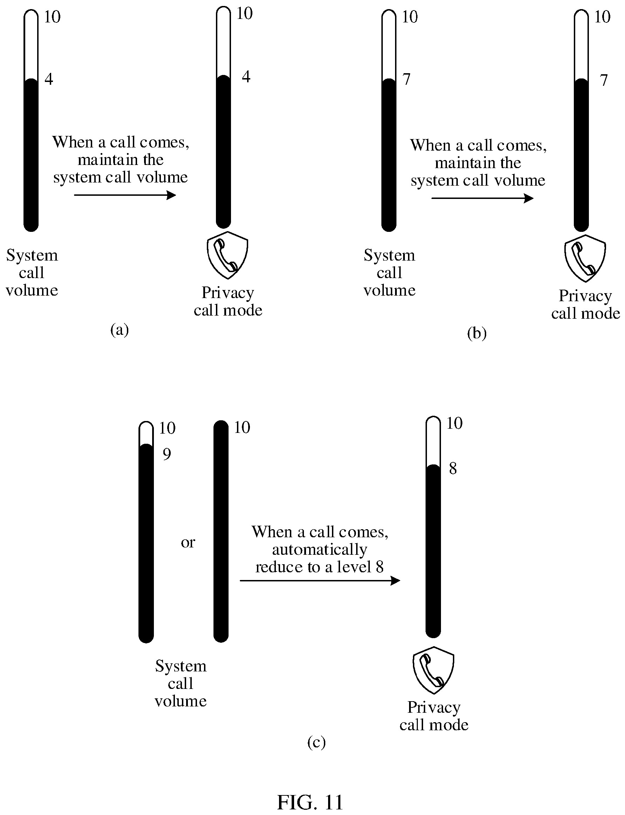

For example, in this embodiment of this application, the following call control rules may be preset:
When the system call volume falls within a volume range of the level 1 to the level 8, after a current incoming call is answered, the system call volume is maintained as a call volume, and the privacy call mode is entered. Referring to (a) in FIG. 11 and (b) in FIG. 11, when the system call volume is at the level 4, after a current incoming call is answered, the call volume is maintained at the level 4, and the privacy call mode is entered. When the system call volume is at the level 7, after a current incoming call is answered, the call volume is maintained at the level 7, and the privacy call mode is entered.

When the system call volume is a level-9 or level-10 volume, after a current incoming call is answered, the call volume is reduced to a preset volume (for example, a level-8 volume), and the privacy call mode is entered. Referring to (c) in FIG. 11, when the system call volume is at the level 9 or the level 10, after a current incoming call is answered, the call volume is automatically reduced to the level 8, and the privacy call mode is entered.

In this embodiment of this application, in a call scenario after an incoming call is answered, the electronic device monitors an ambient sound (which is also referred to as ambient noise, an ambient sound, ambient noise, or the like), the electronic device determines, based on a magnitude of the ambient sound, whether to perform automatic volume adjustment, and perform corresponding switching between the privacy call mode and the normal mode during the volume adjustment.

In a possible implementation, in a call scenario after an incoming call is answered, the electronic device is triggered to acquire an ambient sound only when an output volume of the current call is a level-A volume (for example, a level-8 or level-9 volume), and then, it is determined, based on a magnitude of the ambient sound, whether to perform automatic volume adjustment and mode adjustment.

For example, the electronic device acquires an ambient sound when an output volume of the current call is a level-A volume (for example, a level-8 volume), and then, it is determined, based on a magnitude of the ambient sound, whether to automatically increase the volume and whether it is needed to switch from the privacy call mode to the normal mode. Specifically, when the ambient sound is greater than a specific ambient sound threshold (for example, 55 dB), indicating that an environment in which the electronic device is located is a noisy environment, the electronic device needs to output call voice of the other party at a high volume to ensure call intelligibility. In this case, the electronic device may automatically increase the volume and switch from the privacy call mode to the normal mode. It should be noted that the foregoing ambient sound threshold may be specifically set based on actual needs, and is not limited in this embodiment of this application.

In another example, the electronic device acquires an ambient sound when an output volume of the current call is a level-B volume (for example, a level-9 volume), and then, it is determined, based on a magnitude of the ambient sound, whether to automatically reduce the volume and whether it is needed to switch from the normal mode to the privacy call mode. Specifically, when the ambient sound is less than or equal to a specific ambient sound threshold (for example, 55 dB), indicating that an environment in which the electronic device is located is a quiet environment, there may be a risk of call voice leakage if voice is output in the normal mode, and it is needed to ensure call privacy. In this case, the electronic device may automatically switch to the privacy call mode and reduce the volume.

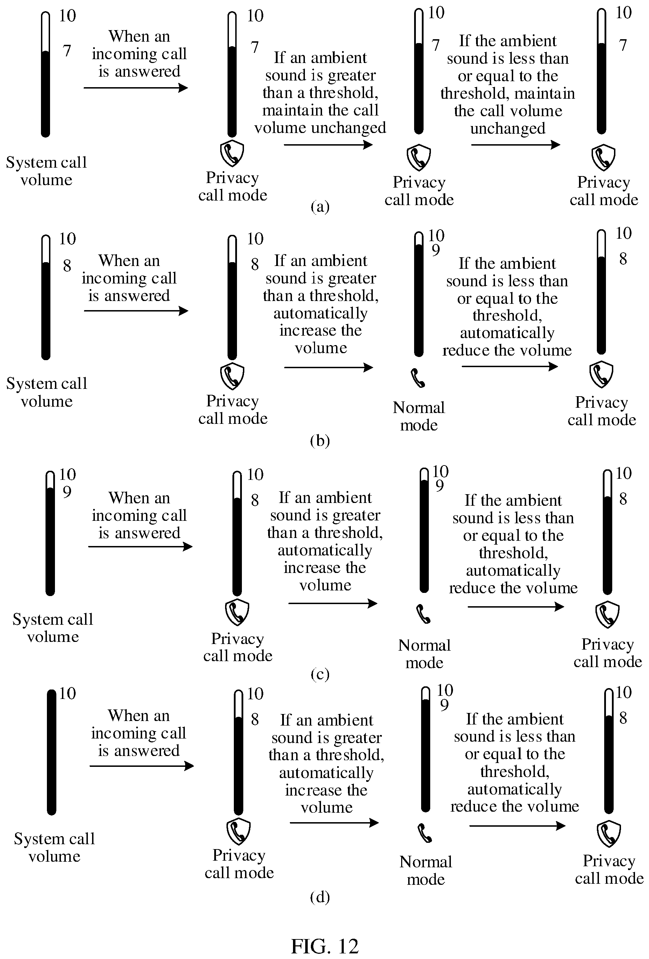

For example, FIG. 12 is a schematic diagram of presenting a call control method according to an embodiment of this application by controlling a volume and a mode.

Referring to (a) in FIG. 12, if a current system call volume is a level-7 volume, when an incoming call is answered, the receiver and the screen sound production apparatus emit sounds at a first ratio and at the level-7 volume, to enter the privacy call mode. During the call, the privacy call mode is kept, and a change of an ambient sound does not trigger automatic call volume adjustment.

Referring to (b) in FIG. 12, if a system call volume is a level-8 volume, when an incoming call is answered, the receiver and the screen sound production apparatus emit sounds at a first ratio and at the level-8 volume, to enter the privacy call mode. During the call, the electronic device monitors an ambient sound, and when the ambient sound is greater than an ambient sound threshold (for example, 55 dB), the electronic device increases the system call volume to a level-9 volume, and exits the privacy call mode. In this case, the receiver and screen sound production apparatus emit sounds at a second ratio and at the level-9 volume. Then, if the ambient sound is less than or equal to the ambient sound threshold, the electronic device reduces the system call volume to the level-8 volume, and enters the privacy call mode again.

Referring to (c) in FIG. 12, if a system call volume is a level-9 volume, when an incoming call is answered, the receiver and the screen sound production apparatus emit sounds at a first ratio and at a level-8 volume, to enter the privacy call mode. During the call, the electronic device monitors an ambient sound, and when the ambient sound is greater than an ambient sound threshold (for example, 55 dB), the electronic device increases the system call volume to the level-9 volume, and exits the privacy call mode. In this case, the receiver and screen sound production apparatus emit sounds at a second ratio and at the level-9 volume. Then, if the ambient sound is less than or equal to the ambient sound threshold, the electronic device reduces the system call volume to the level-8 volume, and enters the privacy call mode again.

Referring to (d) in FIG. 12, if a system call volume is a level-10 volume, when an incoming call is answered, the receiver and the screen sound production apparatus emit sounds at a first ratio and at a level-8 volume, to enter the privacy call mode. During the call, the electronic device monitors an ambient sound, and when the ambient sound is greater than an ambient sound threshold (for example, 55 dB), the electronic device increases the system call volume to a level-9 volume, and exits the privacy call mode. In this case, the receiver and screen sound production apparatus emit sounds at a second ratio and at the level-9 volume. Then, if the ambient sound is less than or equal to the ambient sound threshold, the electronic device reduces the system call volume to the level-8 volume, and enters the privacy call mode again.

It should be noted that if the system call volume is at the level 9 or the level 10 before the incoming call is answered, the electronic device may adjust the volume to the level 8 before the incoming call is answered, or adjust the volume to the level 8 after the incoming call is answered, which may be set based on actual needs, and is not limited in this embodiment of this application.

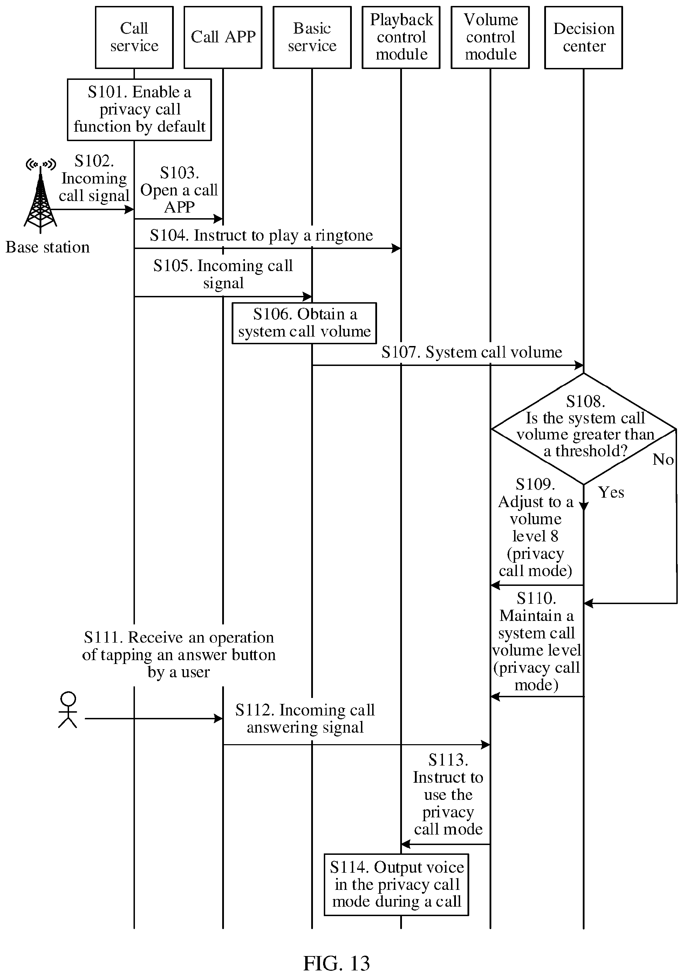

FIG. 13 is a schematic timing diagram of a call control method according to an embodiment of this application. As shown in FIG. 13, the call control method may include S101 to S114. The modules included include a call service, a call APP, a basic service, a playback control module, a volume control module, and a decision center.

S101. The call service enables a privacy call function by default.

If the privacy call function is enabled, when an incoming call notification is received or when an incoming call is answered, the following solution may be performed: determining, based on a magnitude of a system call volume, whether a volume level needs to be adjusted for the current call (answering) and whether to enable the privacy call mode, to avoid sound leakage during the call.

S102. The call service receives an incoming call signal.

S103. The call service opens the call APP in response to the incoming call signal.

Correspondingly, the call APP is opened, and triggers to display an incoming call notification interface on a desktop. An answer button is displayed in the incoming call notification interface. The answer button is configured to trigger to answer an incoming call.

S104. The call service instructs the playback control module to play a ringtone.

Correspondingly, the playback control module plays an incoming call ringtone.

S105. The call service notifies the basic service of the incoming call signal.

S106. The basic service obtains a system call volume.

The system call volume can be measured by a volume level. For example, a level of the system call volume may be any one of the level 1 to the level 10.

S107. The basic service notifies the decision center of the system call volume (which may be specifically a volume level).

S108. The decision center determines whether the system call volume is greater than a volume level threshold.

For example, the volume level threshold may be set to the level 8.

It should be noted that S109 and S110 described below are alternatively performed.

S109. When the system call volume is greater than the volume level threshold, the decision center notifies the volume control module of reducing the volume to the level 8, to enter the privacy call mode.

For example, when the system call volume is at the level 9, the volume may be adjusted to the level 8, to enter the privacy call mode.

S110. When the system call volume is less than or equal to the volume level threshold, the decision center notifies the volume control module of maintaining the system call volume.

For example, the level of the system call volume may be any one of the level 1 to the level 8. Assuming that the system call volume is at the level 7, the system call volume may be maintained at the level 7, to enter the privacy call mode.

S111. The call APP receives an operation of tapping an answer button by a user.

S112. The call APP notifies the volume control module of an incoming call answering signal.

S113. The volume control module instructs the playback control module to use the privacy call mode.

S114. The playback control module outputs voice in the privacy call mode during a call.

For example, in this case, the receiver and the screen sound production apparatus emit sounds at a first ratio and at a level-8 volume or at the first ratio and at a volume below the level 8.

It should be noted that since S109 and S110 are alternatively performed, when the voice is output in the privacy call mode in S114, an answering volume level during the call is determined based on a result of alternatively performing S109 and S110.

An implementation process of automatically adjusting a volume based on the system call volume when an incoming call is answered is described below in detail with reference to schematic diagrams of interfaces of a mobile phone.

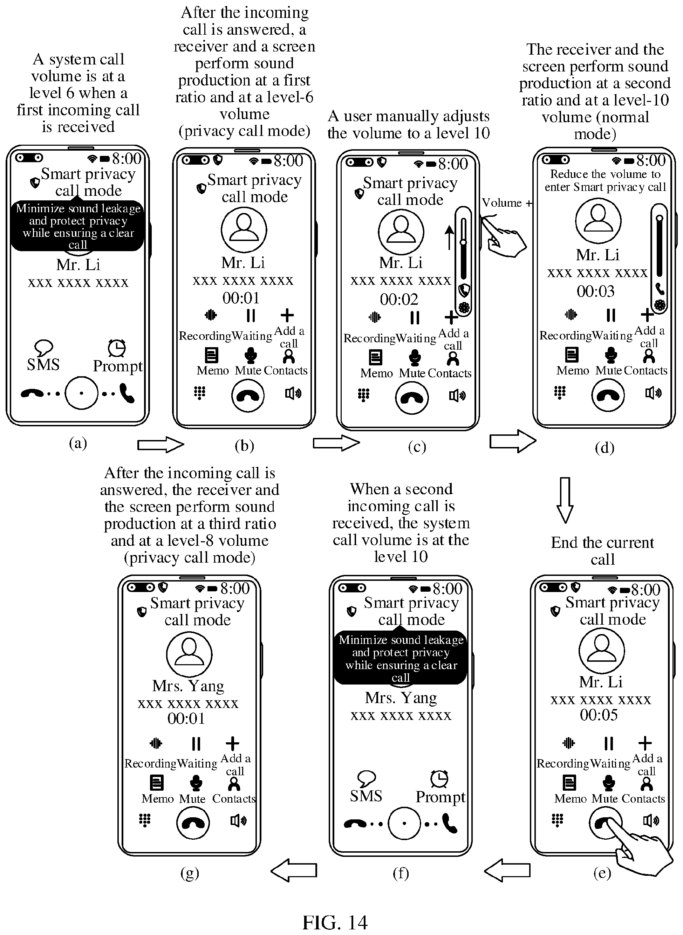

As shown in (a) in FIG. 14, the electronic device receives an incoming call notification and displays an incoming call notification interface. Prompt information "Smart privacy call mode" is displayed in the incoming call notification interface, indicating that a smart privacy call function has been enabled by default, and voice can be output in "Smart privacy call mode" once an incoming call is answered.

In response to an answering operation by the user, as shown in (b) in FIG. 14, the electronic device answers the incoming call, and the receiver and the screen sound production apparatus of the electronic device emit sounds at a first ratio and at a level-6 volume, and in this case, the electronic device is in the privacy call mode.

For example, the first ratio is 3:7. It should be noted that, that the receiver and the screen sound production apparatus of the electronic device emit the sounds at the first ratio and at the level-6 volume means that the receiver and the screen sound production apparatus emit the sounds together, and a total volume of the sounds emitted by the two is the level-6 volume. In the total volume, a proportion of sound intensity of the receiver is 3, and a proportion of sound intensity of the screen sound production apparatus is 7.

As shown in (c) in FIG. 14, the electronic device receives a volume up operation by the user. As shown in (d) in FIG. 14, the electronic device increases the volume, for example, increases the volume to the level 10 (or the level 9). In this case, the receiver and the screen sound production apparatus of the electronic device emit sounds at a second ratio and at a level-10 volume, and in this case, the privacy call mode is exited. The second ratio is greater than the first ratio.

For example, the second ratio is 7: 3. It should be noted that, that the receiver and the screen sound production apparatus of the electronic device emit the sounds at the second ratio and at the level-10 volume means that the receiver and the screen sound production apparatus emit the sounds together, and a total volume of the sounds emitted by the two is the level-10 volume. In the total volume, a proportion of sound intensity of the receiver is 7, and a proportion of sound intensity of the screen sound production apparatus is 3.

As shown in (e) in FIG. 14, the electronic device receives a call ending operation by the user, and ends the current call.

As shown in (f) in FIG. 14, the electronic device receives an incoming call notification again and displays an incoming call notification interface. Likewise, the prompt information "Smart privacy call mode" is displayed in the incoming call notification interface, indicating that the smart privacy call function has been enabled by default, and voice can be output in "Smart privacy call mode" once an incoming call is answered.

In response to an answering operation by the user, as shown in (g) in FIG. 14, the electronic device answers the incoming call, and the receiver and the screen sound production apparatus of the electronic device emit sounds at a third ratio and at a level-8 volume, and in this case, the electronic device is in the privacy call mode. The third ratio is less than the second ratio. In addition, the third ratio may be the same as or different from the first ratio.

For example, the third ratio may be 4:6. It should be noted that, that the receiver and the screen sound production apparatus of the electronic device emit the sounds at the third ratio and at the level-8 volume means that the receiver and the screen sound production apparatus emit the sounds together, and a total volume of the sounds emitted by the two is the level-8 volume. In the total volume, a proportion of sound intensity of the receiver is 4, and a proportion of sound intensity of the screen sound production apparatus is 6.

It should be noted that a specific volume level of the system call volume and a value of a sound ratio of the receiver to the screen sound production apparatus shown in FIG. 14 are both illustrated, may be set or determined based on actual situations during actual implementation, and are not limited in this embodiment of this application.

In some embodiments, the electronic device may continuously acquire an ambient sound during a call and automatically adjust a volume based on a change in a magnitude of the ambient sound. When the ambient sound is less than or equal to a preset ambient sound threshold, and an answering volume is large (for example, at the level 9), it may be determined that the volume needs to be automatically reduced, and the privacy call mode is entered. When the ambient sound is greater than the preset ambient sound threshold, and the answering volume is small (for example, at the level 8), it may be determined that the volume needs to be automatically increased, and the privacy call mode is exited.

An implementation process of automatically adjusting a volume based on the system call volume or the magnitude of the ambient sound when an incoming call is answered is described below in detail with reference to schematic diagrams of interfaces of a mobile phone. Different from that in the related art, after an incoming call is answered, voice is output in a default manner at a constant volume (for example, a constant level-6 volume) preset in "Smart privacy call mode", in this embodiment of this application, a current answering volume can be automatically adjusted based on a magnitude of the system call volume when the incoming call is answered. During a call, the electronic device automatically adjusts the answering volume in different scenarios (a noisy scenario or a quiet scenario) based on changes of an ambient sound.

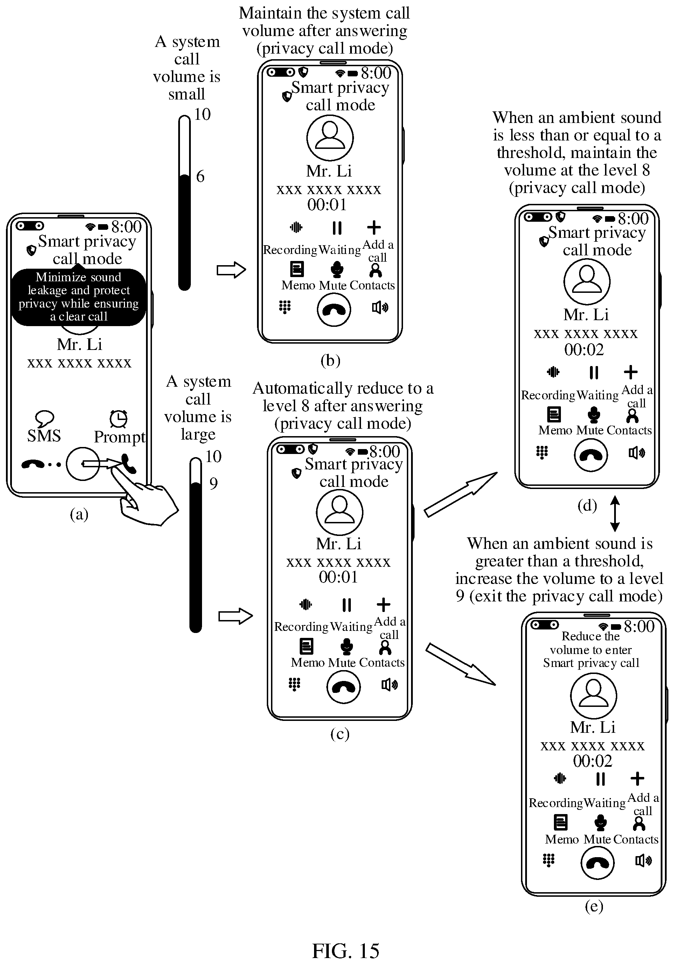

As shown in (a) in FIG. 15, the electronic device receives an incoming call notification and displays an incoming call notification interface. Prompt information "Smart privacy call mode" is displayed in the incoming call notification interface, indicating that a smart privacy call function has been enabled by default, and voice can be output in "Smart privacy call mode" once an incoming call is answered.

In some embodiments, if when a call comes, it is determined that the system call volume falls within a volume range corresponding to the privacy call mode, for example, the system call volume is at the level 6 and is small, it is not needed to perform adjustment after the incoming call is answered, and voice can be output by maintaining the system call volume during the call, to meet use habits of a user as much as possible. Correspondingly, after the user taps an answer button, as shown in (b) in FIG. 15, the electronic device displays an answering interface. Prompt information "Smart privacy call mode" is still displayed in the answering interface, indicating that "Smart privacy call mode" has been enabled for the current call, and the current volume is still maintained at the level 6.

In some other embodiments, if when a call comes, it is determined that the system call volume is at the level 9, is large, and exceeds a volume range corresponding to the privacy call mode, the volume needs to be reduced after the incoming call is answered, so that privacy of the call can be ensured while meeting use habits of a user as much as possible when voice is output. After the user taps an answer button, as shown in (c) in FIG. 15, the electronic device displays an answering interface. Prompt information "Smart privacy call mode" is still displayed in the answering interface, indicating that "Smart privacy call mode" has been enabled for the current call, and the electronic device automatically adjusts the answering volume to the level 8 in the background.

In some other embodiments, as shown in (c) in FIG. 15, it is assumed that the current answering volume is at the level 8. When it is determined that an ambient sound is less than or equal to a preset ambient sound threshold, as shown in (d) in FIG. 15, the electronic device maintains the answering volume at the level 8, and maintains "Smart privacy call mode". However, when it is determined that the ambient sound is greater than the preset ambient sound threshold, as shown in (e) in FIG. 15, the electronic device increases the answering volume to the level 9, automatically exits "Smart privacy call mode", and changes to the normal mode. As shown in (e) in FIG. 15, in the normal mode, prompt information "Reduce the volume to enter Smart privacy call" is displayed in the call interface instead of displaying "Smart privacy call mode", and a privacy call icon is not displayed in a status bar in the call interface any more.

It should be noted that during actual implementation, the volume bar is not displayed in the incoming call notification interface and the answering interface in the automatic adjustment mode. The electronic device always adjusts the volume in the background without requiring a user to perform an operation, which improves the user experience.

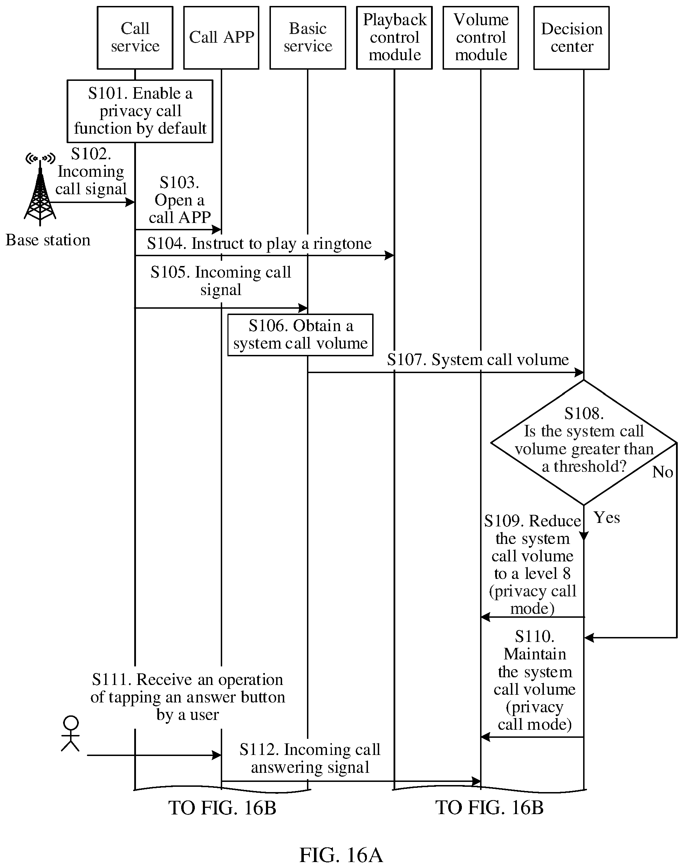

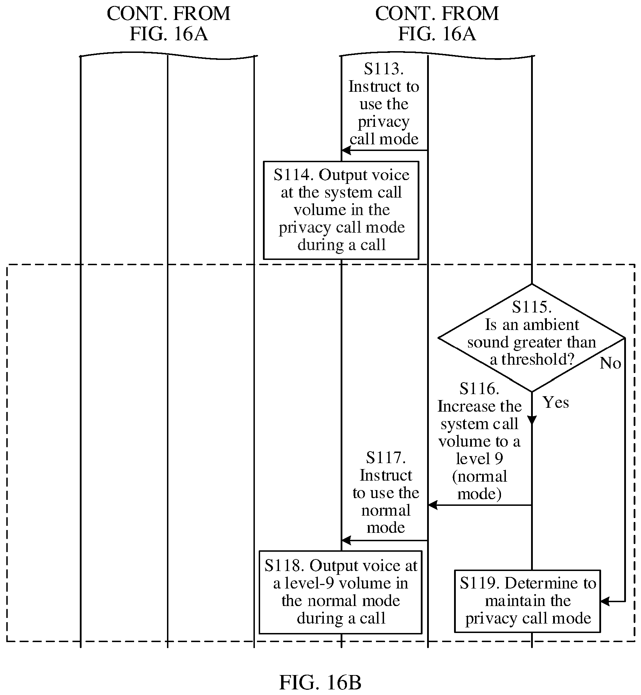

A process of switching from "Smart privacy call mode" to the normal mode during a call is described above. It may be understood that, during actual implementation, a listening environment of a user may change at any time, from a quiet environment to a noisy environment, or from a noisy environment to a quiet environment, and in this case, the electronic device may automatically determine, based on an ambient sound, whether to perform mode switching and volume adjustment. FIG. 16A and FIG. 16B show a schematic flowchart of automatically switching a mode based on a change of an ambient sound. With reference to FIG. 13, as shown in FIG. 16A and FIG. 16B, after S114, the call control method may further include S115 to S119.

S115. The decision center determines whether an ambient sound is greater than an ambient sound threshold.

For example, the ambient sound threshold may be set to 55 dB.

It should be noted that S116 to S118 and S119 described below are alternatively performed.

S116. When the ambient sound is greater than the ambient sound threshold, the decision center instructs the volume control module to switch to the normal mode (to increase the volume level to the level 9).

S117. The volume control module instructs the playback control module to use the normal mode.

S118. The playback control module outputs voice in the normal mode during the call.

S119. When the ambient sound is less than or equal to the ambient sound threshold, the decision center determines to maintain the privacy call mode.

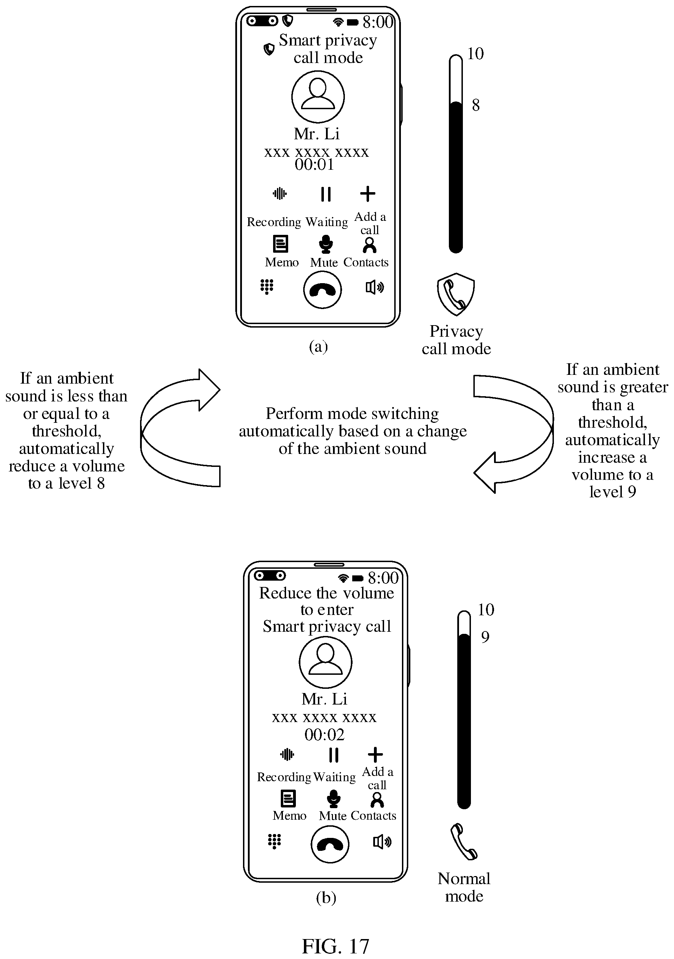

A process of automatically adjusting the system call volume and correspondingly switching a mode based on a change of the ambient sound is described below with reference to FIG. 17.

As shown in (a) in FIG. 17, the electronic device displays a call interface, a current answering volume is at the level 8, voice is output in the privacy call mode, and a privacy call icon and prompt information are displayed in the call interface. As shown in (b) in FIG. 17, when the ambient sound is greater than the threshold, the smart privacy call mode is automatically exited, and the volume is automatically increased (for example, reduced to the level 9), and after mode switching, the privacy call icon and the prompt information disappear from the call interface.

As shown in (b) in FIG. 17, the electronic device displays a call interface, a current answering volume is at the level 9, voice is output in the normal mode. As shown in (a) in FIG. 17, when the ambient sound is less than or equal to the threshold, the smart privacy call mode is automatically switched to, and the volume is automatically reduced (for example, reduced to the level 8), and after mode switching, the privacy call icon and the prompt information are displayed in the call interface, indicating that "Smart privacy call mode" has been enabled in the current call.

In some embodiments, it may be switched from the privacy call mode to the normal mode when the privacy call mode is currently used, and it is detected that the ambient sound is greater than the ambient sound threshold, which lasts for a time length that is longer than a specific time length. Alternatively, it may be switched from the normal mode to the privacy call mode when the normal mode is currently used, and it is detected that the ambient sound is less than or equal to the ambient sound threshold, which lasts for a time length that is longer than a specific time length. In this way, it can avoid performing mode switching back and forth within a short period of time, which improves the user experience.

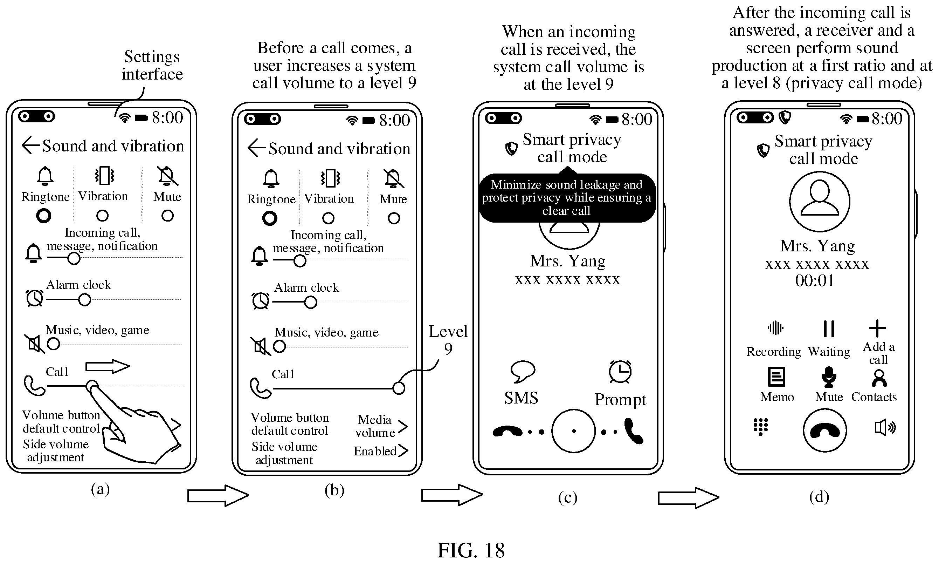

In some embodiments, before a call is made or an incoming call notification is received, a user may adjust a call volume in a settings interface. In this case, the electronic device preferentially uses the privacy call mode when an incoming call or an outgoing call is answered. For example, as shown in (a) in FIG. 18 and (b) in FIG. 18, a user adjusts a call volume to a level 9 in a Sound and vibration settings interface, as shown in (c) in FIG. 18 and (d) in FIG. 18, when an incoming call (or outgoing call) is answered, the electronic device preferentially switches to the privacy call mode and automatically adjusts the level-9 volume to the level 8, and the receiver and the screen sound production apparatus emit sounds together and output call voice at a first ratio (for example, 3:7) and at a level-8 volume, and switching between the privacy call mode and the normal mode can also be triggered based on a magnitude of an ambient sound during a subsequent call.

In some other embodiments, before a call is made or an incoming call notification is received, a user may adjust a call volume in a settings interface. In this case, after a next incoming call or outgoing call is answered, the electronic device may maintain the system call volume set by the user until the user adjusts the call volume during the call to implement switching between the two modes. When the user receives an incoming call notification or makes a call a next time, the electronic device determines, based on a magnitude of the system call volume, whether to automatically adjust the volume and whether to perform mode adjustment between the privacy call mode and the normal mode, which is the method shown in FIG. 11 to FIG. 17.

For example, the user adjusts the call volume to the level 10 in the settings interface before making a call or receiving an incoming call notification. After the user makes a call or receives an incoming call notification, the electronic device emits sounds at the level-10 volume and at a corresponding ratio (a ratio of receiver sound production to screen sound production). During one or more calls before the user manually adjusts the volume to below the level 8 during the call, the electronic device maintains a volume, for example, at the level 10, manually set by the user in system settings. After the user manually adjusts the volume to below the level 8 during the call, the electronic device enters the privacy call mode. In addition, when receiving an incoming call notification or making a call a next time, the electronic device determines the call mode and volume based on the method shown in FIG. 11 to FIG. 17.

### Second embodiment: Manual adjustment manner

The second embodiment is a solution further added to the first embodiment. It should be noted that if the privacy call function is enabled, the electronic device may automatically determine whether to adjust the volume and whether to adjust the mode. When the user triggers volume adjustment or triggers mode adjustment, the electronic device switches from the automatic adjustment mode to the manual adjustment mode, and then performs volume and mode adjustment based on the manual adjustment mode of the user.

In some embodiments, the user may trigger to reduce the volume or increase the volume by pressing a physical volume button of the electronic device, to further trigger to switch a call mode between the privacy call mode and the normal mode.

In some other embodiments, the user may trigger to increase the volume or reduce the volume by performing a swipe operation on a volume bar displayed on a screen, to further trigger to switch a call mode between the privacy call mode and the normal mode.

For example, switching between different call modes is described herein. For example, the user presses a physical volume button, and the electronic device may display a volume bar in response to the operation performed by the user. When the user increases the volume, a filling amount of the volume bar increases, for example, the volume bar changes from the level 8 to the level 9. Therefore, the privacy call mode is automatically exited, and the normal mode is entered, that is, it is switched from the privacy call mode to the normal mode. When the user reduces the volume, the filling amount of the volume bar may decrease. For example, if the volume bar changes from the level 9 to the level 8, it is switched from the normal mode to the privacy call mode.

In this embodiment of this application, by using the call control method provided in this application, switching and use of the privacy call mode and the normal mode may be controlled based on an output volume level or range of the electronic device. For the switching between the privacy call mode and the normal mode, the electronic device may predefine the following rules.

When the output volume level of the electronic device is less than or equal to the preset volume level (for example, the level 8), or when the output volume level of the electronic device falls within a preset first volume level range (for example, [level 1, level 8], the privacy call mode is automatically enabled. When the output volume level of the electronic device is greater than the preset volume level, or when the output volume level of the electronic device falls within a preset second volume level range (for example, [level 9, level 10], the privacy call mode is automatically exited, and the normal mode is entered. A volume value corresponding to each level in the second volume level range is greater than a volume value corresponding to each level in the first volume level range.

For example, when a volume down operation or volume up operation by a user is received, if it is determined that an adjusted volume level is less than or equal to a preset volume level (for example, the level 8), the privacy call mode is enabled. For example, sound production may be simultaneously performed through a screen and a receiver, and the two sound production manners may be controlled for sound production at different volume intensity (for example, sound intensity of the screen is greater than or equal to sound intensity of the receiver), to avoid sound leakage and improve the call experience of the user. If it is determined that the adjusted volume level is greater than the preset volume level (for example, the level 8), the normal mode is enabled. For example, sound production may be simultaneously performed through the screen and the receiver, and the two sound production manners may be controlled for sound production at different volume intensity (for example, sound intensity of the receiver is greater than sound intensity of the screen), to ensure a good voice output effect and improve the call experience of the user.

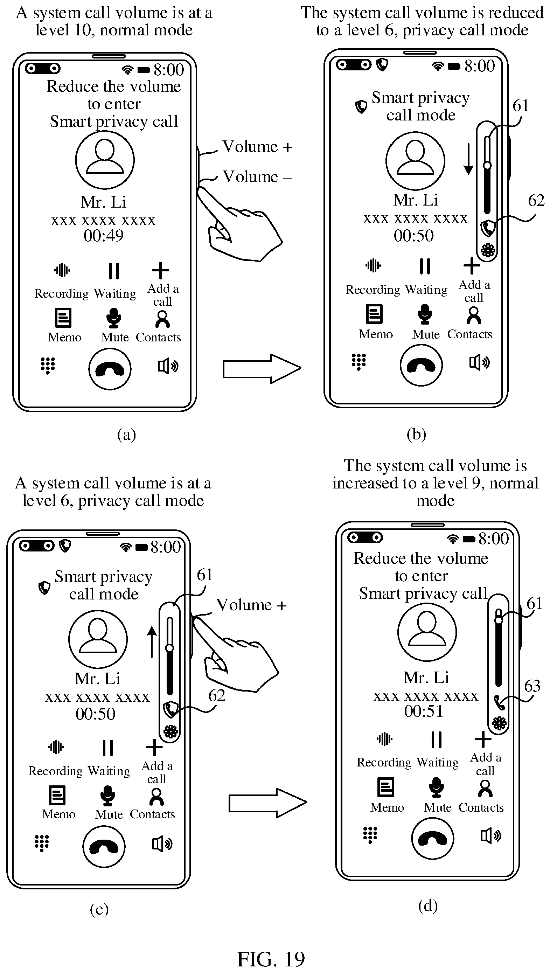

For example, FIG. 19 shows a schematic diagram of an interface of adjusting a volume by pressing a physical volume button to trigger mode switching. As shown in (a) in FIG. 19, assuming that a current answering volume level is the level 10, the user may trigger to reduce the volume by pressing a physical volume button, that is, a - button, of the electronic device. As shown in (b) in FIG. 19, the electronic device switches the call mode to the privacy call mode in response to an operation performed by the user. and displays a volume bar 61 and a privacy call icon 62 in the call interface. The volume bar 61 shows a volume reduction change, and the answering volume level is reduced to, for example, the level 6. Call privacy may be guaranteed in the privacy call mode. Similarly, as shown in (c) in FIG. 19, a volume bar 61 and a privacy call icon 62 are displayed in the call interface. Assuming the current answering volume level is the level 6, the user presses a volume + button. Then, as shown in (d) in FIG. 19, the electronic device switches the call mode to the normal mode in response to an operation performed by the user. A volume bar 61 and a high volume icon 63 are displayed in the call interface. The volume bar 61 shows a volume increasing change, and the answering volume level is the level 9. Call intelligibility may be guaranteed in the normal mode.

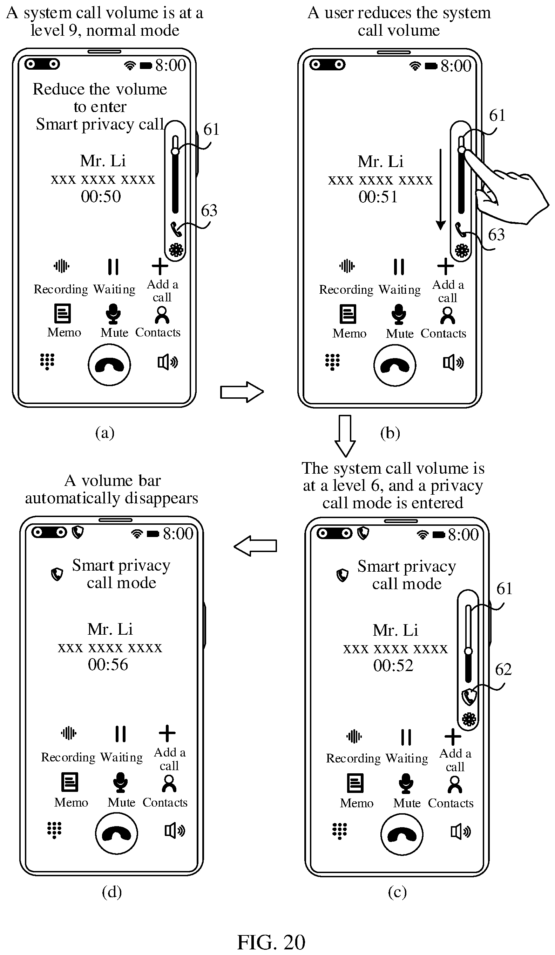

For example, FIG. 20 shows a schematic diagram of an interface of adjusting a volume by pressing a volume bar to trigger mode switching. As shown in (a) in FIG. 19 and (b) in FIG. 19, assuming that the current answering volume level is the level 9, when a volume bar is displayed in the answering interface, the user may trigger to reduce the volume by dragging an adjustment button on the volume bar. As shown in (a) in FIG. 20, the volume is reduced to the level 6, and the call mode is switched from the normal mode to the privacy call mode. As shown in (d) in FIG. 20, the volume bar 61 and the privacy call icon 62 are automatically hidden after a specific time length.

It should be noted that in a scenario in which the user performs on-ear listening through the electronic device, through the call control method provided in this application, the privacy call mode can be automatically enabled when the output volume level of the electronic device is less than or equal to the preset volume level after the output volume level is reduced, to avoid sound leakage during a voice call. When the output volume level of the electronic device exceeds the preset volume level after the output volume level is increased, the privacy call mode is automatically exited, and the normal mode is entered, to ensure a high volume playback effect.

In some embodiments, during a current call, after it is switched to the manual adjustment mode, the automatic adjustment mode is not returned to again. That is, the solution of automatically adjusting the volume and the mode based on the magnitude of the ambient sound is not performed again during the current call.

In some embodiments, assuming that the manual adjustment mode is switched to during a current call, when the electronic device receives an incoming call notification a next time or during a next call, the automatic adjustment mode is still enabled first by default, that is, the method in the first embodiment is still performed.

### Third embodiment: In an incoming call scenario, performing an operation on a physical volume button can trigger to enable "Smart privacy call mode" after a call is answered

Currently, enabling and disabling of "Smart privacy call mode" are supported only in a call answering scenario, but operations in "Smart privacy call mode" cannot be set in an incoming call notification scenario or a scenario in which an incoming call is not answered, the call volume cannot be adjusted, and only a media volume can be controlled.

In view of this, this embodiment of this application provides the following function: In a current incoming call scenario, in response to an operation of pressing a volume button or a power button by a user, the electronic device may enable "Smart privacy call mode" or "Normal mode" before the call is answered, that is, adjust a call volume before the call is answered. Compared with that in the related art, only silencing an incoming call ringtone is triggered when a user presses a volume button or a power button, this solution of this application provides more scenarios in which enabling "Smart privacy call mode" can be triggered.

In some embodiments, in a case that "Smart privacy call mode" is not enabled, before an incoming call is answered or during notification of an incoming call, the electronic device may quickly enable "Smart privacy call mode" in response to double-pressing a volume down button by a user.

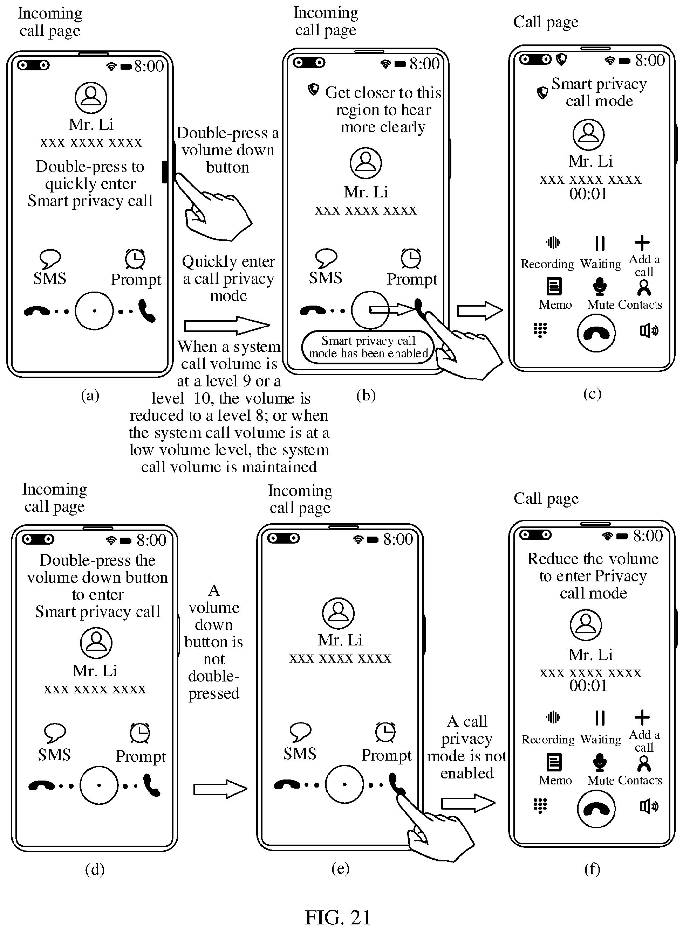

For example, as shown in (a) in FIG. 21, the electronic device receives an incoming call, displays an incoming call notification interface, and displays prompt information "Double-press to quickly enter Smart privacy call" in a preset region (which, for example, is near a physical volume button) on a screen. As shown in (b) in FIG. 21, if a system call volume is at the level 9 or level 10 before the incoming call is answered, after the user double-presses the volume down button, the electronic device may reduce the call volume, for example, to the level 8 automatically. In addition, the electronic device enables a smart privacy call function and displays prompt information "Smart privacy call mode has been enabled" in the incoming call notification interface. In this case, an incoming call ringtone is silenced. As shown in (c) in FIG. 21, when the incoming call is answered, the electronic device outputs voice in the smart privacy call mode at the reduced system call volume.

It should be noted that if the system call volume is at the level 8 or below the level 8 before the electronic device answers the incoming call, the electronic device may not adjust the system call volume after the user double-presses the volume down button. When the incoming call is answered, the electronic device outputs voice in the smart privacy call mode at the system call volume that is not adjusted.

In a comparative example, as shown in (d) in FIG. 21, when prompt information "Double-press the volume down button to enter Smart privacy call" is displayed in the incoming call notification interface, as shown in (e) in FIG. 21, if the user taps an answer button without double-pressing the volume down button first, as shown in (f) in FIG. 21, the electronic device displays prompt information "Reduce the volume to enter Privacy call mode" in the call interface, and the smart privacy call function is not enabled.

It should be noted that if the system call volume is at the level 9 or the level 10 before the incoming call is answered, after the user double-presses the volume down button, the electronic device may adjust the volume before the incoming call is answered, or adjust the volume after the incoming call is answered, which may be set based on actual needs, and is not limited in this embodiment of this application.

In some embodiments, before an incoming call is answered or during notification of an incoming call, in response to double-pressing the volume down button by the user, the electronic device may automatically answer the incoming call directly without requiring the user to tap an answer control, and reduce the system call volume in the foregoing manner or maintain the system call volume, to quickly enable "Smart privacy call mode".

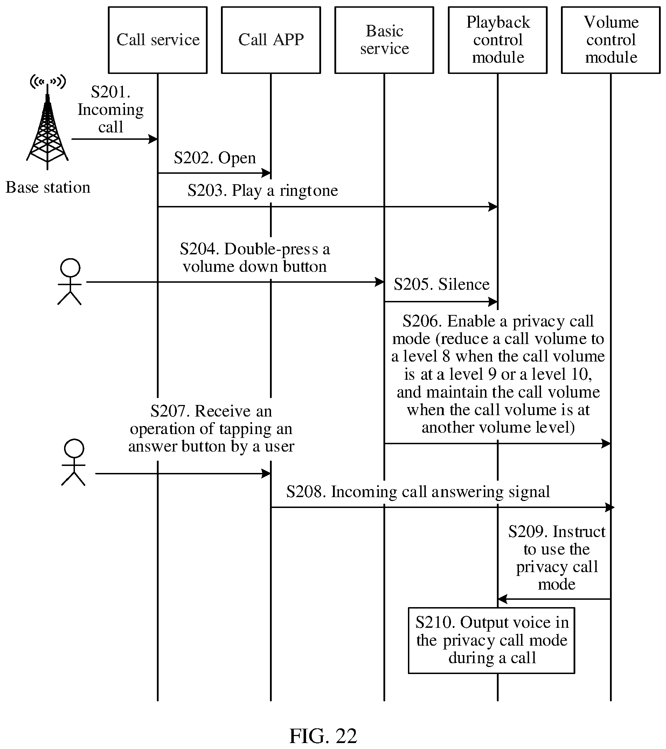

FIG. 22 is another schematic timing diagram of a call control method according to an embodiment of this application. As shown in FIG. 22, the call control method may include S201 to S210. The modules included include a call service, a call APP, a basic service, a playback control module, and a volume control module.

S201. The call service receives an incoming call signal.

It should be noted that in this case, the privacy call function is not enabled.

S202. The call service opens the call APP in response to the incoming call signal.

Correspondingly, the call APP is opened, and triggers to display an incoming call notification interface on a desktop. An answer button is displayed in the incoming call notification interface. The answer button is configured to trigger to answer an incoming call.

S203. The call service instructs the playback control module to play a ringtone.

Correspondingly, the playback control module plays an incoming call ringtone.

S204. The basic service receives an operation of double-pressing a volume down button by a user.

S205. The basic service notifies the playback control mode of silencing the incoming call ringtone.

S206. The basic service notifies the volume control mode of enabling the privacy call mode.

For example, in a case the system call volume is at a level 9 or a level 10, when the electronic device receives an incoming call notification, if the user double-presses the volume down button, the electronic device reduces the system call volume to a level 8, and outputs sounds at a level-8 volume after the call is answered. It may be understood that because the level-8 volume is corresponding to the privacy call mode, the privacy call mode is automatically enabled correspondingly.

In another example, in a case the system call volume falls within a range of [level 1, level 8], when the electronic device receives an incoming call notification, if the user double-presses the volume down button, the electronic device maintains the system call volume. For example, the system call volume is at a level 6 when the electronic device receives an incoming call notification, and if the user double-presses the volume down button, the electronic device maintains the system call volume at the level 6, and outputs sounds at a level-6 volume after the call is answered. It may be understood that because the level-6 volume is corresponding to the privacy call mode, the privacy call mode is automatically enabled correspondingly.

S207. The call APP receives an operation of tapping an answer button by a user.

S208. The call APP notifies the volume control module of an incoming call answering signal.

S209. The volume control module instructs the playback control module to use the privacy call mode.

S210. The playback control module outputs voice in the privacy call mode during a call.

In some other embodiments, in a case that "Smart privacy call mode" is not enabled, when a call comes, the electronic device may silence an incoming call ringtone in response to pressing the volume down button by a user. The electronic device may display a volume bar in the incoming call notification interface in response to pressing the volume down button again by the user. The user may perform volume adjustment by performing an operation on the volume bar, to trigger to quickly enable "Smart privacy call mode".

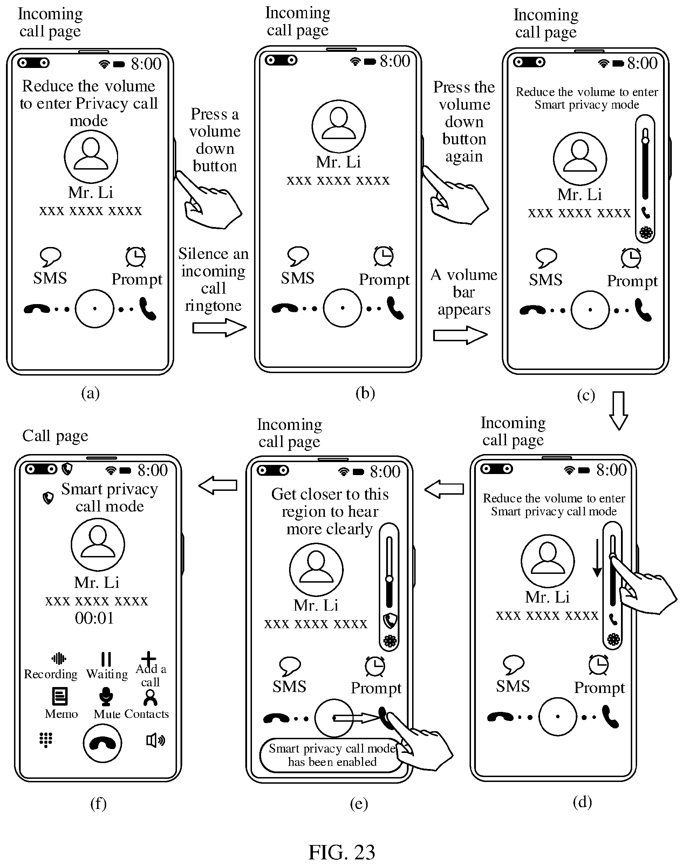

For example, as shown in (a) in FIG. 23, the electronic device receives an incoming call, displays an incoming call notification interface, and displays prompt information "Reduce the volume to enter Smart privacy call". As shown in (b) in FIG. 23, after the user presses the volume down button, the electronic device silences an incoming call ringtone. After the user presses the volume down button again, as shown in (c) in FIG. 23, the electronic device displays the volume bar in the incoming call notification interface. As shown in (d) in FIG. 23, in response to an operation performed by the user on the volume bar, the electronic device reduces the volume, enables the smart privacy call function, and displays prompt information "Smart privacy call mode has been enabled " in the incoming call notification interface as shown in (e) in FIG. 23. As shown in (f) in FIG. 23, when the incoming call is answered, the electronic device outputs voice in the smart privacy call mode.

### Fourth embodiment: Quickly enabling or disabling "Smart privacy call mode" through a privacy call switch

In some embodiments, a privacy call switch may be displayed in an incoming call notification interface, and the electronic device may quickly enable or disable "Smart privacy call mode" in response to an operation by a user on the privacy call switch. In some other embodiments, a privacy call switch may also be displayed in a call interface after an incoming call is answered, and the electronic device may quickly enable or disable "Smart privacy call mode" in response to an operation by a user on the privacy call switch.

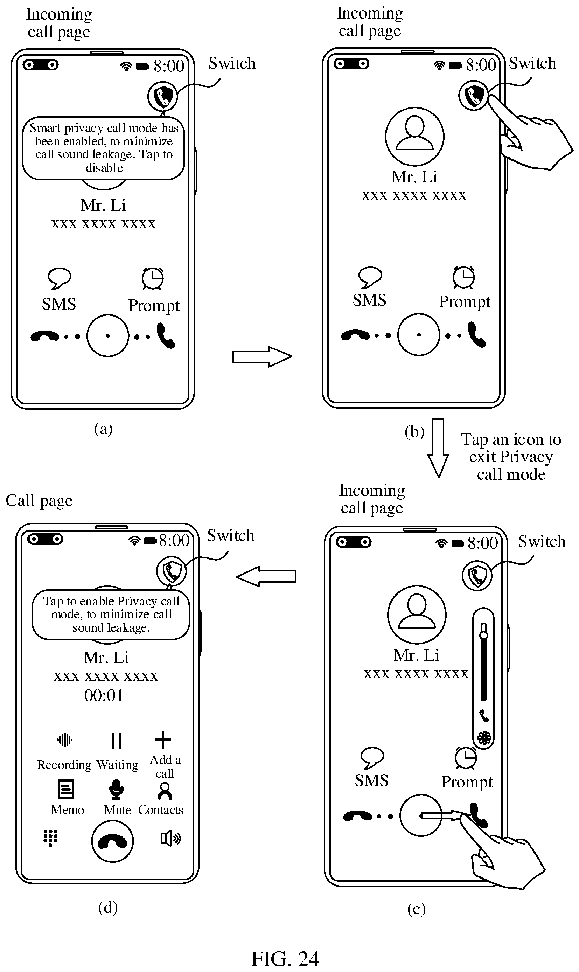

For example, FIG. 24 shows a diagram of an interface of triggering a privacy call switch in an incoming call page. As shown in (a) in FIG. 24, the electronic device receives an incoming call, and displays an incoming call notification interface. A privacy call switch and prompt information "Smart privacy call mode has been enabled, to minimize sound leakage. Tap to disable" are displayed in the incoming call notification interface. In this case, the privacy call switch indicates that the privacy call mode is in an enabled state. As shown in (b) in FIG. 24 and (c) in FIG. 24, after the user taps the privacy call switch, a display state of the privacy call switch is updated (for example, is changed from a dark color to a light color). In this case, the privacy call switch indicates that the privacy call mode is in a disabled state. In addition, in response to an operation to disabling Privacy call by the user, the electronic device displays a volume bar and a high volume icon in the incoming call notification interface. Further, after the user taps an answer button, as shown in (d) in FIG. 24, the electronic device displays a call interface, and the privacy call switch is still displayed in the call interface. Optionally, prompt information "Tap to enable Privacy call mode, to minimize sound leakage" may be displayed in a region near the privacy call switch.

It should be noted that a display manner of the privacy call switch in this embodiment of this application is only an example, and this application is not limited thereto. For example, the privacy call switch may also be displayed in the form of a capsule in a status bar at the top of the display interface.

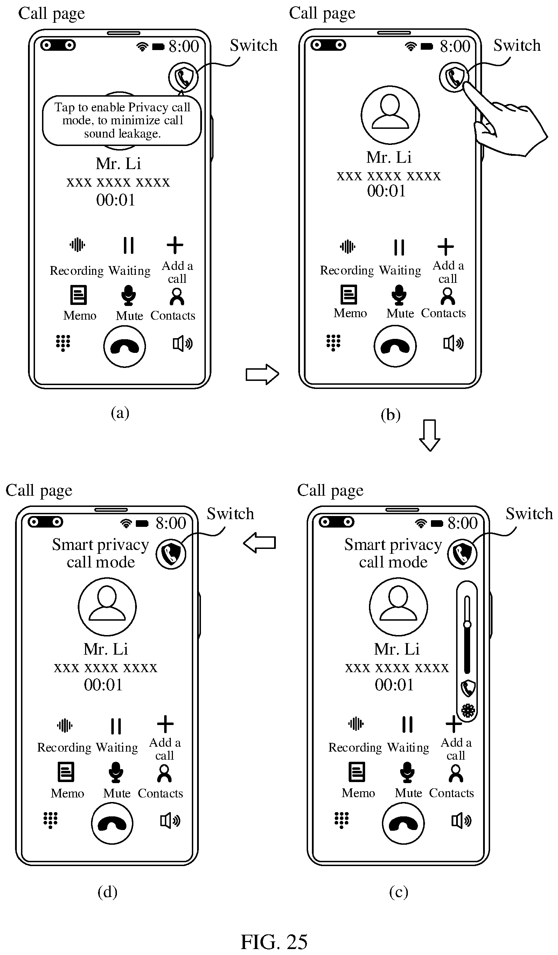

In another example, FIG. 25 shows a diagram of an interface of triggering a privacy call switch in a call page. As shown in (a) in FIG. 25, the electronic device displays a call interface. A privacy call switch and prompt information "Tap to enable Privacy call mode, to minimize sound leakage during the call" are displayed in the call interface. In this case, the privacy call switch indicates that the privacy call mode is in a disabled state. As shown in (b) in FIG. 25 and (c) in FIG. 25, when the user taps the privacy call switch, a display state of the privacy call switch is updated. The privacy call switch indicates that the privacy call mode is in an enabled state (for example, is changed from a light color to a dark color). In addition, in response to an operation to enabling Privacy call by the user, the electronic device displays a volume bar and a privacy call icon in the incoming call notification interface. During a call, the electronic device outputs voice in the privacy call mode. Optionally, prompt information "Smart privacy call mode has been enabled, to minimize sound leakage during the call. Tap to disable" may be displayed in a region near the privacy call switch. As shown in (d) in FIG. 25, the volume bar is automatically hidden after a specific time length.

It should be noted that the foregoing embodiments are described by using an incoming call scenario as an example. During actual implementation, the foregoing embodiments are applicable to an outgoing call scenario. For example, a privacy call switch may be displayed in an outgoing call interface, and the electronic device may quickly enable or disable "Smart privacy call mode" in response to an operation by a user on the privacy call switch. In addition, a privacy call switch may also be displayed in a call interface after an outgoing call is answered, and the electronic device may quickly enable or disable "Smart privacy call mode" in response to an operation by a user on the privacy call switch.

### Fifth embodiment: Popping up a volume bar and a mode adjustment prompt when an incoming call is answered

In some embodiments, if "Smart privacy call mode" is not enabled, when an incoming call is answered, a volume bar and prompt information "Reduce the volume to enter Smart privacy call mode" are immediately popped up in a call interface. A user may choose, based on actual use needs, to reduce the volume to trigger the electronic device to enable the smart privacy call mode, or not adjust the volume, to avoid enabling the smart privacy call mode.

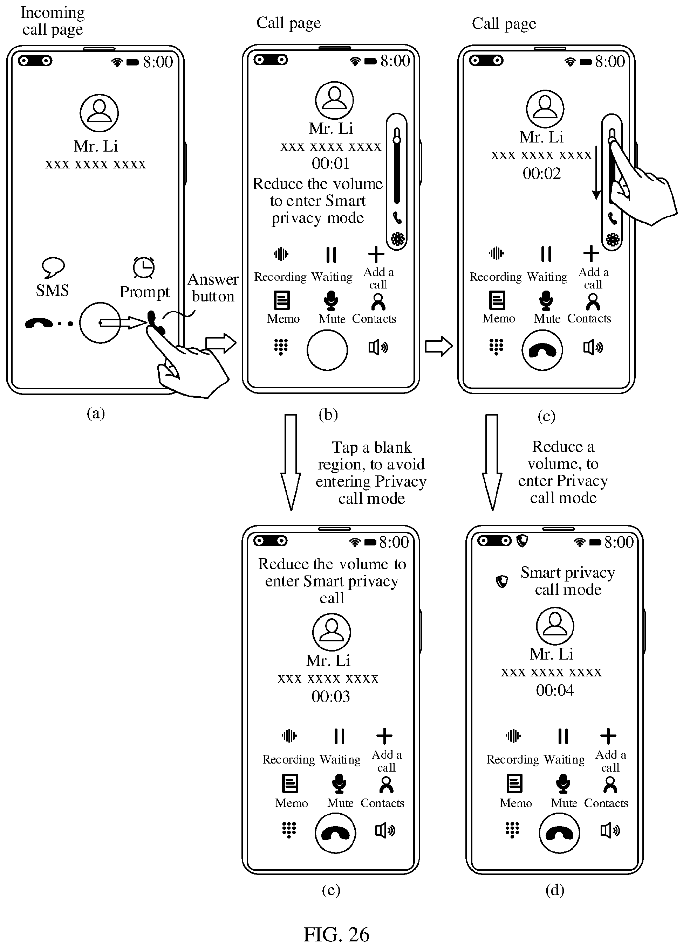

For example, FIG. 26 shows a diagram of an interface of prompting to enable a privacy call mode in an incoming call notification page. As shown in (a) in FIG. 26, the electronic device receives an incoming call, and displays an incoming call page. After the user taps an answer button, as shown in (d) in FIG. 26, the electronic device displays a call interface, and a volume bar, a high volume icon, and prompt information "Reduce the volume to enter Smart privacy call mode" are displayed in the call interface. In this case, the user may have two options as follows: As shown in (c) in FIG. 26 and (d) in FIG. 26, the user performs an operation on the volume bar to reduce the volume, which may trigger to enter the privacy call mode; or as shown in (e) in FIG. 26, the user does not perform an operation on the call interface or taps a blank region of the call interface, to avoid entering the privacy call mode.

It should be noted that the foregoing embodiments are described by using an incoming call scenario as an example. During actual implementation, the foregoing embodiments are applicable to an outgoing call scenario. In some embodiments, if "Smart privacy call mode" is not enabled, when an outgoing call is answered, and the electronic device is not close to an ear, a volume bar and prompt information "Reduce the volume to enter Smart privacy call mode" may be immediately popped up in the call interface, to guide the user to enable the smart privacy call mode by adjusting the volume bar. The user may choose, based on actual use needs, to reduce the volume to trigger the electronic device to enable the smart privacy call mode. In some embodiments, in a case that "Smart privacy call mode" is not enabled, when an outgoing call is answered, and the electronic device is close to an ear, the electronic device may control to turn off a display, to avoid an accidental touch.

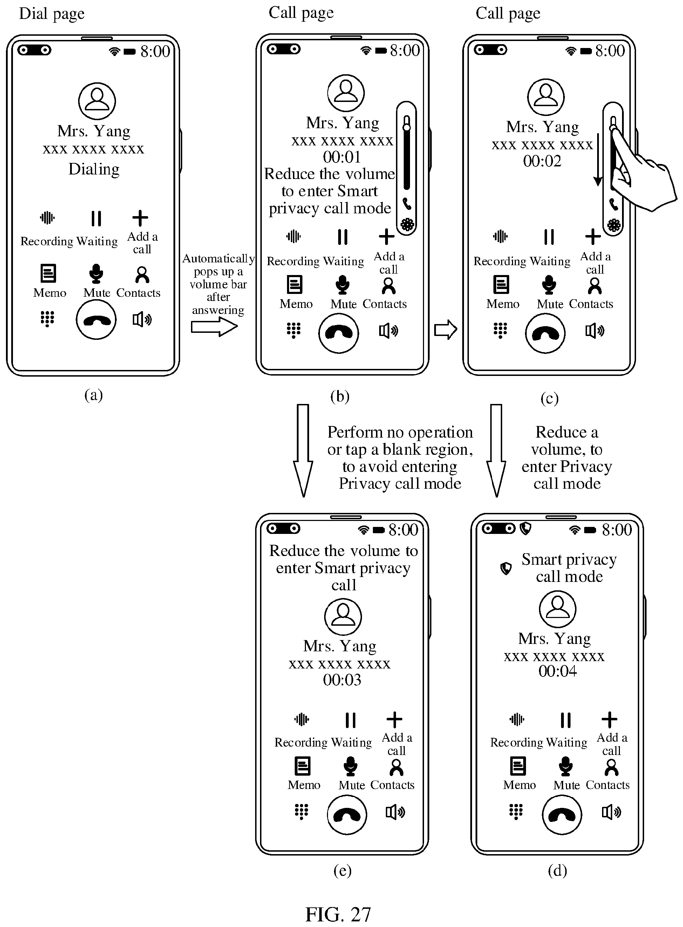

For example, FIG. 27 shows a diagram of an interface of prompting to enable a privacy call mode in a call page for an outgoing call. As shown in (a) in FIG. 27, the electronic device displays an outgoing call page. After a call is answered, as shown in (b) in FIG. 27, the electronic device displays a call interface, and a volume bar, a high volume icon, and prompt information "Reduce the volume to enter Smart privacy call mode" are displayed in the call interface. In this case, the user may have two options as follows: As shown in (c) in FIG. 27 and (d) in FIG. 27, the user performs an operation on the volume bar to reduce the volume, which may trigger to enter the privacy call mode; or as shown in (e) in FIG. 27, the user does not perform an operation on the call interface or taps a blank region of the call interface, to avoid entering the privacy call mode.

In this embodiment of this application, after the smart privacy call function is enabled, in a voice call scenario, the privacy call mode may be automatically enabled when an output volume level of the electronic device is less than a preset volume level. In other words, in the voice call scenario, when the output volume level of the electronic device is less than the preset volume level, the privacy call mode is automatically switched to. Voice is output in a voice output manner corresponding to the privacy call mode (for example, sound production is performed through both the screen and the receiver, and sound intensity of the screen is greater than sound intensity of the receiver), to avoid sound leakage during a voice call.

In some other embodiments, in a voice call scenario, when a plurality of successive operations of triggering volume reduction by a user are sensed, the privacy call mode may also be automatically switched to. In addition, voice is output in a voice output manner corresponding to the privacy call mode (for example, sound production is performed through both the screen and the receiver, and sound intensity of the screen is greater than sound intensity of the receiver), to avoid sound leakage during a voice call.

In some embodiments, when it is switched from the privacy call mode to the normal mode, an overall sound volume (or loudness or intensity) may also be increased based on a volume corresponding to the privacy call mode, to improve a voice playback effect. In other words, overall sound loudness of sounds produced through the receiver and the screen in the normal mode is greater than overall sound loudness of sounds produced through the receiver and the screen in the privacy call mode.

Compared with the receiver sound production manner, the screen sound production manner can effectively prevent sound leakage during a voice call. Therefore, when the user makes or answers a call in a quiet environment, the user usually expects to minimize sound leakage. In this case, the privacy call mode may be used, which can minimize sound leakage while ensuring a clear call, thereby protecting user privacy.

The process of switching between the privacy call mode and the normal mode is described above in detail, and a possible implementation of switching between the privacy call mode and the speaker mode is further described below.

In some embodiments, through the audio processing method provided in this application, in a case that the electronic device is in the privacy call mode, when the electronic device receives that the user taps a speaker icon, the speaker mode may be switched to, that is, voice is output through the speaker. In this case, neither the screen nor the receiver performs sound production. Optionally, further, when the electronic device receives that the user taps the speaker icon, the speaker mode may be exited, and the privacy call mode may be entered again.

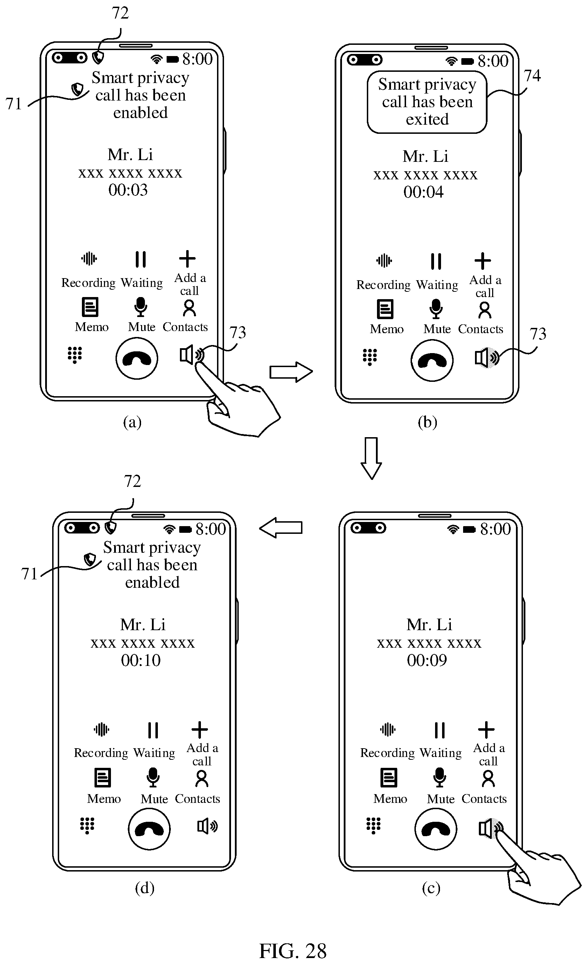

For example, FIG. 28 shows a schematic diagram of a voice call interface after an incoming call is answered. The following prompt information is displayed in the voice call interface: "Smart privacy call has been enabled" 71 and an icon 72 identifying a privacy call. As shown in (a) in FIG. 28, the user taps a speaker button 73 in the voice call interface to trigger to play voice through the speaker. As shown in (b) in FIG. 28, in response to the operation by the user on the speaker button 73, the mobile phone enables a handsfree function. In this case, the voice is played through the speaker, and neither the screen nor the receiver performs sound production, and prompt information "Smart privacy call has been exited" 74 may be displayed in the voice call interface, and display of "Smart privacy call has been enabled" 71 and the icon 72 identifying a privacy call is correspondingly canceled. The prompt information "Smart privacy call is exited" 74 may be hidden after being displayed for a preset time length (such as 5 seconds).

Further, optionally, as shown in (c) in FIG. 28, the user may tap the speaker button 73 in the voice call interface again to trigger to disable the speaker. As shown in (d) in FIG. 28, in response to the operation by the user on the speaker button 73, the mobile phone is switched to the privacy call mode from the speaker mode. In this way, switching between the privacy call mode and the normal mode is implemented.

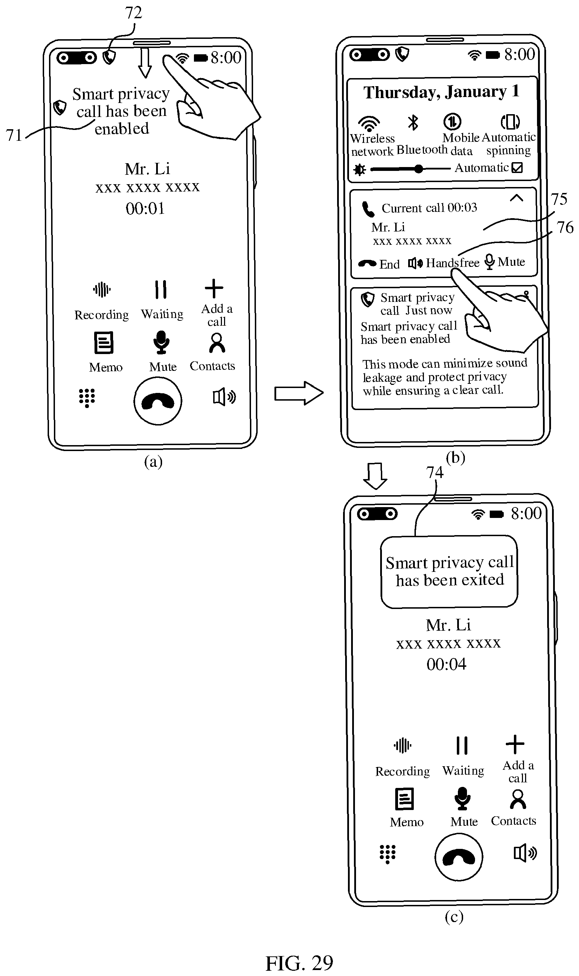

In another example, FIG. 29 shows a schematic diagram of an interface of triggering to switch from a privacy call mode to a speaker mode by performing an operation on a notification card of a smart privacy call function. As shown in (a) in FIG. 29, a user slides a finger down in a direction of an arrow on the voice call interface to pull down a menu bar. As shown in (b) in FIG. 29, the menu bar (also referred to as a notification interface) is displayed. A notification card 75 is displayed in the menu bar. The notification card 75 indicates that a voice call is in progress, and the user may tap a handsfree logo 76 in the notification card 75 to trigger to enable the handsfree function. As shown in (c) in FIG. 29, after the user taps the handsfree logo 76, the voice call interface is returned to from a menu bar interface, and the prompt information "Smart privacy call has been exited" 74 may be displayed in the voice call interface. Correspondingly, display of "Smart privacy call has been enabled" 71 and an icon 72 identifying a privacy call is canceled. In this way, switching between the privacy call mode and the normal mode is implemented.

In some embodiments, the electronic device provides a settings interface for the smart privacy call function, and the user may trigger to enable or disable the smart privacy call function in the settings interface based on actual use needs.

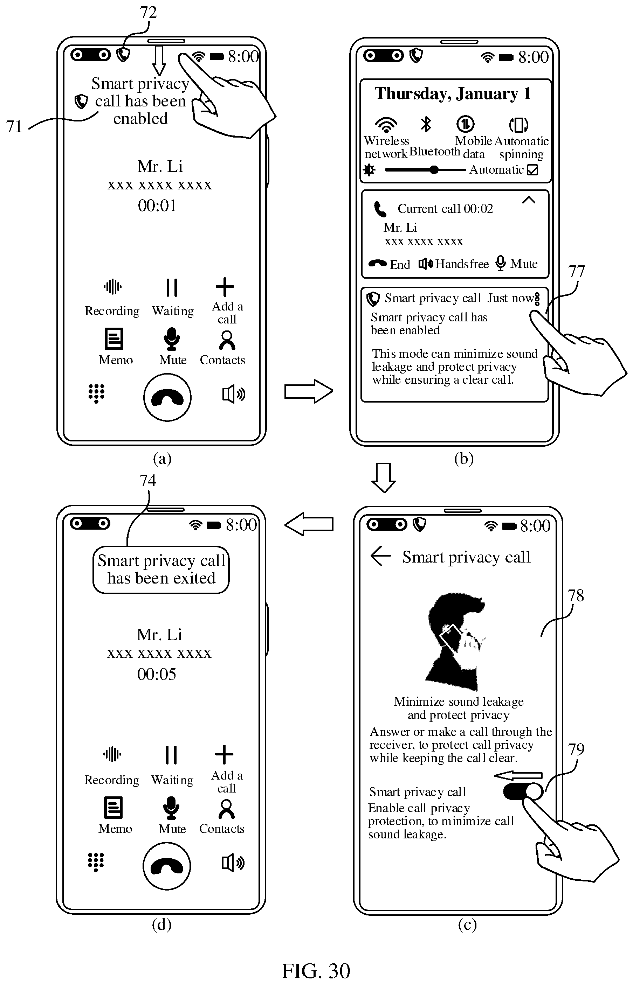

For example, FIG. 30 shows a schematic diagram of entering a settings interface of a smart privacy call function through a notification card of the smart privacy call function. As shown in (a) in FIG. 30, a user slides a finger down in a direction of an arrow on a voice call interface to pull down a menu bar. As shown in (b) in FIG. 30, the menu bar (also referred to as a notification interface) is displayed. A notification card 77 is displayed in the menu bar. The notification card 77 indicates that the smart privacy call function has been enabled, and the user can may the notification card 77 to set the smart privacy call function. As shown in (c) in FIG. 30, after the user taps the notification card 75, the settings interface 78 of the smart privacy call function is jumped to from the menu bar interface. The settings interface 78 includes a switch control 79 of the smart privacy call function, and the switch control 79 currently indicates that the smart privacy call function is in an enabled state. The user may perform an operation (such as a swipe operation in the direction of the arrow shown in the figure) on the switch control 79, to trigger to disable the smart privacy call function.

Further, as shown in (d) in FIG. 30, after the user performs the operation on the switch control 79, the privacy call mode is exited, and the voice call interface is jumped to from the settings interface 78 of the smart privacy call function, and the prompt information "Smart privacy call has been exited" 74 may be displayed in the voice call interface. Correspondingly, display of "Smart privacy call has been enabled" 71 and an icon 72 identifying a privacy call is canceled.

It should be noted that illustrative descriptions are provided by using a voice call scenario, to which the foregoing embodiments are applied, as an example. It may be understood that the solutions related to switching between the privacy call mode and the speaker mode, function settings for the privacy call mode, and the like provided in the foregoing embodiments may also be applied to a VoIP voice call scenario.

In this way, when a user performs on-ear listening through the electronic device, the electronic device may determine whether to enable the privacy call mode or the normal mode based on different volume levels, and may choose to perform sound production through the receiver and/or the screen. For example, when the volume level set by the electronic device by default or the volume level adjusted as triggered by the user is less than or equal to the preset volume level, the privacy call mode is enabled. In the privacy call mode, voice may be played through the receiver and the screen at different sound intensity, for example, the sound intensity of the screen is greater than the sound intensity of the receiver. For example, when the volume level set by the electronic device by default or the volume level adjusted as triggered by the user is greater than the preset volume level, the normal mode is enabled. In the normal mode, voice may also be played through the receiver and the screen at different sound intensity, for example, the sound intensity of the receiver is greater than the sound intensity of the screen. By using receiver sound production and screen sound production are used complementarily, when playing voice, the electronic device not only can avoid sound leakage in a quiet environment, but also can have good sound quality. Therefore, privacy of the user can be well protected, so that the electronic device provides better privacy when the user performs on-ear listening.

Based on the above, when a user performs on-ear listening through the mobile phone, or the user selects a receiver mode (that is, a mode in which the mobile phone plays a sound through a receiver), the mobile phone can determine whether the current volume level is less than or equal to the preset volume level, and determine, based on a determining result, whether to enable the privacy call mode or the normal mode. The following describes a possible implementation of how to detect an action of performing on-ear listening through the mobile phone by the user.

That a user performs on-ear listening through a mobile phone (that is, an on-ear listening state in which the mobile phone is located) may be that an ear of the user is close to a receiver of the mobile phone, and listens, through the receiver, to audio data (such as recording data and song data) stored in the mobile phone; or may be that when an ear of the user is close to the receiver for voice communication (the voice communication may be voice communication performed with another electronic device by using a phone function in the mobile phone, or may be voice communication performed with another electronic device by using an instant messaging application installed in the mobile phone), the user listens, through the receiver of the mobile phone, to sound data transmitted from a mobile phone of a peer user and received by the mobile phone; or may be that an ear of the user is close to the receiver to listen to a voice message or the like in an instant messaging application through the receiver of the mobile phone. For example, the mobile phone receives a voice message from another mobile phone through the instant messaging application. The mobile phone may display a chat interface of the instant messaging application, and the chat interface includes a voice message from another mobile phone. In response to a tap operation by the user on the voice message, the mobile phone may play, through the receiver, the voice message (that is, a sound signal) from the another mobile phone.

For example, the mobile phone may detect, through a sensor such as a light sensor or a distance sensor, whether an ear of the user is close to the receiver. For example, the mobile phone may detect, through the distance sensor, whether there is an obstruction in front of a front panel (or a screen) of the mobile phone, and when there is an obstruction at a short distance to the front of the front panel, it may be determined that an ear of the user is currently close to the receiver. In another example, when the mobile phone detects, through the light sensor, that light intensity instantaneously decreases and changes greatly, it may be determined that an ear of the user is currently close to the receiver. Certainly, in another embodiment of this application, the mobile phone may alternatively detect, in another manner or by using an algorithm, whether an ear of the user is close to the receiver. Alternatively, reference may be made to related descriptions in the conventional technology. This is not limited herein.

In some embodiments, when a user performs on-ear listening through a mobile phone, the mobile phone may also display various listening modes for the user to choose, so that the user may manually select a listening mode based on actual use needs, and trigger the mobile phone to execute corresponding sound playback policies of receiver sound production and screen sound production. The listening mode may include the privacy call mode and the normal mode.

It should be noted that in the foregoing example, after receiving an operation that is of selecting a listening mode and that is input by the user, the mobile phone may directly play a sound by using a corresponding sound playback policy. A corresponding sound playback policy is used for each listening mode.

In the privacy call mode, the sound may be played by using a sound playback policy of performing sound production through both the receiver and the screen, where the sound intensity of the screen may be greater than or equal to the sound intensity of the receiver. In other words, the mobile phone may play voice simultaneously by using screen sound production as a main manner and receiver sound production as an auxiliary manner. The privacy call mode may also use only the screen sound production.

In the normal mode, the sound may be played by using a sound playback policy of performing sound production through both the receiver and the screen, where the sound intensity of the receiver may be greater than the sound intensity of the screen. In other words, the mobile phone may play voice simultaneously by using receiver sound production as a main manner and screen sound production as an auxiliary manner. The normal mode may also use only the receiver sound production.

Based on various scenarios in which the user performs on-ear listening in the foregoing examples, the voice played through the receiver and screen sound production may be any piece of audio data stored in the mobile phone. For example, the voice may be recording data or song data stored in the mobile phone, or may be sound data transmitted from a mobile phone of a peer user and received by the mobile phone when the mobile phone performs voice communication, or may be a voice message or the like in an instant messaging application installed in the mobile phone.

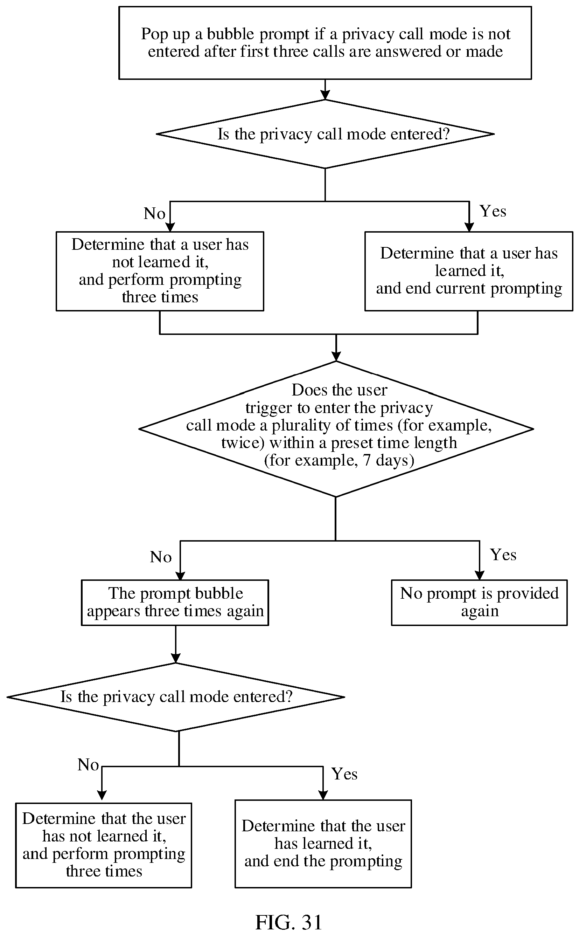

FIG. 31 is a schematic flowchart of prompting a privacy call function in a call control method according to an embodiment of this application. As shown in FIG. 31, a bubble prompt (for example, a bubble prompt shown in FIG. 5 above) pops up in the incoming call notification interface or the outgoing call interface when the privacy call mode is not entered after first three calls are answered or made. It is further determined whether to enter the privacy call mode. If it is detected that the privacy call mode is not entered, it indicates that the user has not learned the privacy call function. The electronic device prompts the user by popping up a bubble, for example, three times. If it is detected that the privacy call mode is entered, it indicates that the user has learned the function. Further, it is determined whether the user triggers to enter the privacy call mode a plurality of times (for example, twice) within a preset time length (for example, 7 days). If it is detected that the privacy call mode is not entered, it indicates that the user still has not learned the privacy call function. Therefore, the electronic device pops up a bubble three times again for prompting and does not stop performing prompting until the user has learned the privacy call function. If it is detected that the privacy call mode is entered, it indicates that the user has learned the function, and the prompting is not performed again.

Optionally, in this embodiment of this application, in a quiet environment, the mobile phone may further adjust the volume (or referred to as loudness) of receiver sound production and screen sound production based on a distance between the human ear and the mobile phone (or the receiver). In addition, a frequency band output through receiver sound production and a frequency band output through screen sound production may also be adjusted.

For example, when the human ear is away from the mobile phone, the mobile phone may increase the volume of receiver sound production and screen sound production. In addition, the mobile phone may further reduce sound production in a high-frequency part in the frequency band output through receiver sound production, that is, reduce a boundary frequency between the frequency band output through screen sound production and the frequency band output through receiver sound production, so that a lower frequency band is output through receiver sound production. Because most of energy generated through screen sound production directly faces the human ear, and some of energy generated through receiver sound production is released from the sound output hole at the top of the middle frame of the mobile phone, receiver sound production is more prone to sound leakage than screen sound production after the volume is increased. Therefore, the frequency band output through receiver sound production is further lowered, so that after the volume is increased, another user can be prevented from clearly hearing a sound output through receiver sound production.

In some embodiments, sound intensity of screen sound production may be set based on sensitivity of screen sound production. In other words, specified sound intensity of screen sound production may be different based on different sensitivity of screen sound production.

For example, in this embodiment of this application, screen sound production may be implemented through a screen sound production apparatus (for example, the screen sound production apparatus shown in FIG. 2). The screen sound production apparatus is different based on different screen sound production solutions. For example, the screen sound production apparatus may be a vibration source (which is usually a piezoelectric ceramic, or may be a motor vibrator, an exciter, or another vibration unit) connected to the back of the screen. The piezoelectric ceramic may be controlled, by a current signal, to vibrate, to drive the screen to vibrate, to implement screen sound production. In another example, the screen sound production apparatus may alternatively be a piezoelectric ceramic that is fastened to the middle frame of the mobile phone by a cantilever beam structure. The piezoelectric ceramic may be controlled by a current signal to vibrate, and the vibration is transferred to the screen through the middle frame of the mobile phone, to drive the screen to vibrate, to implement screen sound production. In another example, the screen sound production apparatus may alternatively be an exciter fastened to the middle frame of the mobile phone. The exciter may be controlled, by a current signal, to vibrate, and the vibration is transferred to the screen through the middle frame of the mobile phone, to drive the screen to vibrate, to implement screen sound production. In another example, the screen sound production apparatus may alternatively be separated magnetic levitation vibrators. One of the vibrators is fastened to the middle frame of the mobile phone, and the other vibrator is fastened to the screen. The vibrator fastened to the screen may be controlled, by a current signal, to vibrate relative to the vibrator fastened to the middle frame of the mobile phone, to push the screen to vibrate, to implement screen sound production. Affected by a type and a position set for the screen sound production apparatus, a weight of the middle frame of the mobile phone, an internal structure layout of the mobile phone, and the like, sensitivity of screen sound production in different screen sound production solutions is different. Small sound intensity and pushing power of screen sound production may be set for screen sound production with high sensitivity, and large sound intensity and pushing power of screen sound production may be set for screen sound production with low sensitivity.

Optionally, in this embodiment of this application, the electronic device (for example, the mobile phone) may automatically enable the functions implemented in the foregoing method, or it may be set that a user manually enables the functions implemented in the foregoing method.

It should also be noted that, in embodiments of this application, "greater than" may be replaced with "greater than or equal to", and "less than or equal to" may be replaced with "less than"; or "greater than or equal to" may be replaced with "greater than", and "less than" may be replaced with "less than or equal to".

Each embodiment described herein may be an independent solution, or may be combined based on an internal logic, and such solutions all fall within the protection scope of this application.

It may be understood that, in the foregoing method embodiments, the methods and operations implemented by the electronic device may alternatively be implemented by a component (for example, a chip or a circuit) that may be used in the electronic device.

This application further provides a chip. The chip is coupled to a memory. The chip is configured to read and execute a computer program or instructions stored in the memory, to perform the method in the foregoing embodiments.

This application further provides an electronic device. The electronic device includes a chip. The chip is configured to read and execute a computer program or instructions stored in a memory, so that the method in the foregoing embodiments is performed.

This embodiment further provides a computer-readable storage medium. Computer instructions are stored in the computer-readable storage medium, and when the computer instructions are run on an electronic device, the electronic device is enabled to perform the foregoing related method steps to implement the call control method in the foregoing embodiments.

This embodiment further provides a computer program product. Program code is stored in the computer-readable storage medium. When the computer program product is run on a computer, the computer is enabled to perform the foregoing related steps to implement the call control method in the foregoing embodiments.

In addition, embodiments of this application further provide an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the call control method in the foregoing method embodiments.

The electronic device, the computer-readable storage medium, the computer program product, or the chip provided in this embodiment is configured to perform the corresponding method provided above. Therefore, for beneficial effects that can be achieved, refer to the beneficial effects in the corresponding method provided above. Details are not described herein again.

A specific structure of an execution body of the method provided in embodiments of this application is not specifically limited in embodiments of this application, provided that a program that records code of the method provided in embodiments of this application can be run to perform call control according to the method provided in embodiments of this application. For example, the method provided in embodiments of this application may be performed by an electronic device, or a functional module that is in an electronic device and that can invoke a program and execute the program.

The term "and/or" in this specification describes an association relationship for describing associated objects and represents that three relationships may exist. For example, A and/or B may represent the following three cases: Only A exists, both A and B exist, and only B exists. The character "/" in this specification indicates an "or" relationship between associated objects. For example, "A/B" indicates A or B.

The terms "first", "second", and the like in the specification and the claims in this specification are used to distinguish between different objects, and are not used to describe a specific sequence of the objects. In the description of embodiments of this application, unless otherwise stated, "a plurality of" means two or more. For example, "a plurality of processing units" means two or more processing units, and "a plurality of elements" means two or more elements.

In embodiments of this application, the term "exemplary" or "for example" is used to represent giving an example, an illustration, or a description. Any embodiment or design scheme described as an "exemplary" or "for example" in embodiments of this application should not be explained as being more preferred or having more advantages than another embodiment or design scheme. Exactly, use of the term, such as "exemplary" or "for example", is intended to present a related concept in a specific manner.

In the several embodiments provided in this application, it should be understood that the disclosed apparatus and method may be implemented in other manners. For example, the described apparatus embodiment is merely an example. For example, the module or unit division is merely logical function division and may be another division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electric, mechanical, or other forms.

In the several embodiments provided in this application, it should be understood that the disclosed system, apparatus and method may be implemented in other manners. For example, the described apparatus embodiments are merely examples. For example, the unit division is merely logical function division and may be another division in actual implementation. For example, multiple units or components may be combined or integrated into another system, or some features may be ignored or are not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such understanding, the technical solutions of this application essentially, or the part contributing to the conventional technology, or some of the technical solutions may be implemented in a form of a computer software product. The computer software product is stored in a storage medium, and includes several instructions for instructing a computer device (which may be a personal computer, a server, a network device, or the like) to perform all or some of the steps of the method described in embodiments of this application. The foregoing storage medium may include but is not limited to various media that can store program code, such as a USB flash drive, a removable hard disk, a ROM, a RAM, a magnetic disk, or an optical disc.

The foregoing descriptions are merely specific implementations of this application, and are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A call control method, applied to an electronic device (100), wherein the electronic device (100) comprises a receiver (101, 370B), a screen, and a screen sound production apparatus (104, 396), the screen sound production apparatus (104, 396) is configured to drive the screen to perform screen sound production, and the method comprises:
receiving (S102-S104), by the electronic device (100), a first incoming call when a call volume set by a system of the electronic device (100) is a first volume;
receiving (S109, S110, S111-S114), by the electronic device (100), a first operation by a user, and answering the first incoming call in response to the first operation, and emitting, by the receiver (101, 370B) and the screen sound production apparatus (104, 396) of the electronic device (100), a first sound at a first ratio and at the first volume;
receiving, by the electronic device (100) during the first incoming call, a second operation by the user, and emitting, by the receiver (101, 370B) and the screen sound production apparatus (104, 396), a second sound at a second ratio and at a second volume in response to the second operation, wherein the second volume is greater than the first volume;
receiving, by the electronic device (100), a third operation by the user, and ending the first incoming call in response to the third operation;
receiving, by the electronic device (100), a second incoming call when the call volume set by the system of the electronic device (100) is the second volume; and
receiving, by the electronic device (100), a fourth operation by the user, and answering the second incoming call in response to the fourth operation, and emitting, by the receiver (101, 370B) and the screen sound production apparatus (104, 396) of the electronic device (100), a third sound at a third ratio and at a third volume, wherein the third volume is greater than the first volume, and the third volume is less than the second volume, wherein
the first ratio, the second ratio, and the third ratio are respectively ratio values of sound intensity of the receiver (101, 370B) to sound intensity of the screen sound production apparatus (104, 396), wherein
the first ratio is less than the second ratio, and the third ratio is less than the second ratio.

2. The method according to claim 1, wherein after the emitting, by the receiver (101, 370B) and the screen sound production apparatus (104, 396) of the electronic device (100), a third sound at a third ratio and at a third volume, the method further comprises:
emitting, by the receiver (101, 370B) and the screen sound production apparatus (104, 396) of the electronic device (100), the third sound at the third ratio and at the third volume when a magnitude of an ambient sound in which the electronic device (100) is located is a first value; and
emitting, by the receiver (101, 370B) and the screen sound production apparatus (104, 396) of the electronic device (100), a fourth sound at a fourth ratio and at a fourth volume when the magnitude of the ambient sound in which the electronic device (100) is located is a second value, wherein
the first value is less than the second value, the third ratio is different from the fourth ratio, and the third volume is less than the fourth volume.

3. The method according to claim 1 or 2, wherein before the receiving, by the electronic device (100), a first incoming call, the method further comprises:
enabling a first function by default after the electronic device (100) is powered on, wherein
when the first function is enabled, the sound intensity of the receiver (101, 370B) is less than the sound intensity of the screen sound production apparatus (104, 396) after an incoming call or an outgoing call is answered.

4. The method according to any one of claims 1 to 3, wherein the second operation is an operation of pressing a physical volume up button by the user or an operation of dragging a volume adjustment button in a volume bar icon upward by the user.

5. The method according to any one of claims 1 to 4, wherein
an output volume of the electronic device (100) is represented by a volume decibel value; or
the output volume of the electronic device (100) is represented by a volume level, wherein volume decibel values within a preset range are divided into N volume levels, the N volume levels are in a one-to-one correspondence with N decibel values, and N is a positive integer, wherein
the N volume levels comprise a volume level 1 to a volume level 10, wherein volume levels respectively corresponding to the first volume and the third volume fall within a range of [level (101) 1, level (101) I], and volumes respectively corresponding to the second volume and the fourth volume fall within a range of [level (101) I+1, level (101) 10], wherein I is an integer greater than 1 and less than 10.

6. The method according to claim 5, wherein a value of I is set to 8.

7. The method according to claim 1, further comprising:
enabling, by the electronic device (100), a first function in response to an operation of double-pressing a volume down button by a user, wherein the first function is that sound intensity of the receiver (101, 370B) is less than sound intensity of the screen sound production apparatus (104, 396); and
enabling, by the electronic device (100), the first function in response to an operation of double-pressing the volume down button by the user

8. The method according to claim 7, wherein the receiving, by the electronic device (100), a first incoming call comprises:
displaying, by the electronic device (100), an incoming call notification interface (40); and
displaying, by the electronic device (100), first prompt information in the incoming call notification interface (40) when the incoming call is not answered, wherein the first prompt information prompts to trigger, by double-pressing the volume down button, to enable the first function.

9. The method according to any one of claims 7 to 8, wherein after the enabling the first function, the method further comprises:
displaying, by the electronic device (100), second prompt information in the incoming call notification interface (40), wherein the second prompt information prompts that the first function has been enabled.

10. The method according to any one of claims 7 to 9, further comprising:
silencing, by the electronic device (100), an incoming call ringtone in response to an operation of double-pressing the volume down button by the user.

11. The method according to any one of claims 7 to 10 further comprising:
receiving, by the electronic device (100), a third incoming call;
silencing, by the electronic device (100), an incoming call ringtone in response to receiving an operation of pressing the volume down button by the user; and
displaying, by the electronic device (100), a volume bar icon in the incoming call notification interface (40) in response to an operation of pressing the volume down button again by the user, wherein the volume bar icon represents the call volume set by the system of the electronic device (100).

12. The method according to claim 11, wherein after the displaying, by the electronic device (100), a volume bar icon in the incoming call notification interface (40), the method further comprises:
adjusting, by the electronic device (100), the call volume in response to an operation by the user on the volume bar icon; and
enabling the first function when the adjusted volume is a first call volume; or
disabling the first function when the adjusted volume is a second call volume, wherein
the first call volume is less than the second call volume.

13. The method according to any one of claims 7 to 12, further comprising:
receiving, by the electronic device (100), a fourth incoming call when the first function is disabled;
displaying, by the electronic device (100), a call interface (45, 46, 50) in response to that the call is answered; and
displaying the volume bar icon in the call interface (45, 46, 50) and presenting an animation guide and a textual prompt, wherein the animation guide comprises a downward movement of a volume adjustment button in the volume bar icon, and the textual prompt prompts to trigger, through a volume down operation, to enable the first function.

14. The method according to any one of claims 7 to 12, further comprising:
displaying, by the electronic device (100), a switch icon of the first function in an incoming call notification interface (40), an outgoing call interface, or a call interface (45, 46, 50);
enabling, by the electronic device (100), the first function in response to receiving a tap operation by the user on the switch icon; and
disabling, by the electronic device (100), the first function in response to receiving a tap operation by the user on the switch icon again.

## Patentansprüche

1. Anrufsteuerungsverfahren, angewendet auf eine elektronische Vorrichtung (100), wobei die elektronische Vorrichtung (100) einen Hörer (101, 370B), einen Bildschirm und eine Bildschirmschallerzeugungsvorrichtung (104, 396) umfasst, wobei die Bildschirmschallerzeugungsvorrichtung (104, 396) dazu konfiguriert ist, den Bildschirm zur Durchführung einer Bildschirmschallerzeugung anzusteuern, und wobei das Verfahren umfasst:
Empfangen (S102-S104) eines ersten eingehenden Anrufs durch die elektronische Vorrichtung (100), wenn eine durch ein System der elektronischen Vorrichtung (100) eingestellte Anruflautstärke eine erste Lautstärke ist;
Empfangen (S109, S110, S111-S114) einer ersten Operation durch einen Benutzer durch die elektronische Vorrichtung (100) und Annehmen des ersten eingehenden Anrufs als Reaktion auf die erste Operation sowie Ausgeben eines ersten Tons durch den Hörer (101, 370B) und die Bildschirmschallerzeugungsvorrichtung (104, 396) der elektronischen Vorrichtung (100) mit einem ersten Verhältnis und bei der ersten Lautstärke;
Empfangen einer zweiten Operation durch den Benutzer durch die elektronische Vorrichtung (100) während des ersten eingehenden Anrufs und Ausgeben eines zweiten Tons durch den Hörer (101, 370B) und die Bildschirmschallerzeugungsvorrichtung (104, 396) mit einem zweiten Verhältnis und bei einer zweiten Lautstärke als Reaktion auf die zweite Operation, wobei die zweite Lautstärke größer als die erste Lautstärke ist;
Empfangen einer dritten Operation durch den Benutzer durch die elektronische Vorrichtung (100) und Beenden des ersten eingehenden Anrufs als Reaktion auf die dritte Operation;
Empfangen eines zweiten eingehenden Anrufs durch die elektronische Vorrichtung (100), wenn die durch das System der elektronischen Vorrichtung (100) eingestellte Anruflautstärke die zweite Lautstärke ist; und
Empfangen einer vierten Operation durch den Benutzer durch die elektronische Vorrichtung (100) und Annehmen des zweiten eingehenden Anrufs als Reaktion auf die vierte Operation sowie Ausgeben eines dritten Tons durch den Hörer (101, 370B) und die Bildschirmschallerzeugungsvorrichtung (104, 396) der elektronischen Vorrichtung (100) mit einem dritten Verhältnis und bei einer dritten Lautstärke, wobei die dritte Lautstärke größer als die erste Lautstärke ist und die dritte Lautstärke kleiner als die zweite Lautstärke ist, wobei
das erste Verhältnis, das zweite Verhältnis und das dritte Verhältnis jeweils Verhältniswerte der Schallintensität des Hörers (101, 370B) zur Schallintensität der Bildschirmschallerzeugungsvorrichtung (104, 396) sind, wobei
das erste Verhältnis kleiner als das zweite Verhältnis ist und das dritte Verhältnis kleiner als das zweite Verhältnis ist.

2. Verfahren nach Anspruch 1, wobei das Verfahren nach dem Ausgeben eines dritten Tons mit einem dritten Verhältnis und bei einer dritten Lautstärke durch den Hörer (101, 370B) und die Bildschirmschallerzeugungsvorrichtung (104, 396) der elektronischen Vorrichtung (100) ferner umfasst:
Ausgeben, durch den Empfänger (101, 370B) und die Bildschirm-Tonausgabevorrichtung (104, 396) der elektronischen Vorrichtung (100), des dritten Tons mit dem dritten Verhältnis und mit der dritten Lautstärke, wenn eine Stärke eines Umgebungsgeräusches, in dem sich die elektronische Vorrichtung (100) befindet, ein erster Wert ist; und
Ausgeben, durch den Empfänger (101, 370B) und die Bildschirm-Tonausgabevorrichtung (104, 396) der elektronischen Vorrichtung (100), eines vierten Tons mit einem vierten Verhältnis und mit einer vierten Lautstärke, wenn die Stärke des Umgebungsgeräusches, in dem sich die elektronische Vorrichtung (100) befindet, ein zweiter Wert ist, wobei
der erste Wert kleiner als der zweite Wert ist, das dritte Verhältnis sich von dem vierten Verhältnis unterscheidet und die dritte Lautstärke kleiner als die vierte Lautstärke ist.

3. Verfahren nach Anspruch 1 oder 2, wobei vor dem Empfangen eines ersten eingehenden Anrufs durch die elektronische Vorrichtung (100) das Verfahren ferner umfasst:
Aktivieren einer ersten Funktion standardmäßig, nachdem die elektronische Vorrichtung (100) eingeschaltet wurde, wobei
wenn die erste Funktion aktiviert ist, die Schallintensität des Empfängers (101, 370B) geringer ist als die Schallintensität der Bildschirm-Tonausgabevorrichtung (104, 396), nachdem ein eingehender oder ausgehender Anruf angenommen wurde.

4. Verfahren nach einem der Ansprüche 1 bis 3, wobei die zweite Operation eine Operation des Drückens einer physischen Lauter-Taste durch den Benutzer oder eine Operation des Ziehens einer Lautstärkeeinstelltaste in einem Lautstärkebalken-Symbol nach oben durch den Benutzer ist.

5. Verfahren nach einem der Ansprüche 1 bis 4, wobei
eine Ausgangslautstärke der elektronischen Vorrichtung (100) durch einen Lautstärke-Dezibelwert dargestellt wird; oder
die Ausgangslautstärke der elektronischen Vorrichtung (100) durch einen Lautstärkepegel dargestellt wird, wobei Lautstärke-Dezibelwerte innerhalb eines voreingestellten Bereichs in N Lautstärkepegel unterteilt sind, die N Lautstärkepegel in einer Eins-zu-eins-Entsprechung mit N Dezibelwerten stehen und N eine positive ganze Zahl ist, wobei
die N Lautstärkepegel einen Lautstärkepegel 1 bis einen Lautstärkepegel 10 umfassen, wobei Lautstärkepegel, die jeweils der ersten Lautstärke und der dritten Lautstärke entsprechen, in einen Bereich von [Pegel (101) 1, Pegel (101) I] fallen und Lautstärken, die jeweils der zweiten Lautstärke und der vierten Lautstärke entsprechen, in einen Bereich von [Pegel (101) I+1, Pegel (101) 10] fallen, wobei I eine ganze Zahl größer als 1 und kleiner als 10 ist.

6. Verfahren nach Anspruch 5, wobei ein Wert von I auf 8 gesetzt ist.

7. Verfahren nach Anspruch 1, ferner umfassend:
Aktivieren, durch das elektronische Gerät (100), einer ersten Funktion als Reaktion auf eine Betätigung durch doppeltes Drücken einer Leiser-Taste durch einen Benutzer, wobei die erste Funktion darin besteht, dass die Schallintensität des Hörers (101, 370B) geringer ist als die Schallintensität der Bildschirm-Tonausgabevorrichtung (104, 396); und
Aktivieren, durch das elektronische Gerät (100), der ersten Funktion als Reaktion auf eine Betätigung durch doppeltes Drücken der Leiser-Taste durch den Benutzer.

8. Das Verfahren nach Anspruch 7, wobei das Empfangen, durch das elektronische Gerät (100), eines ersten eingehenden Anrufs umfasst:
Anzeigen, durch das elektronische Gerät (100), einer Benutzeroberfläche für eingehende Anrufe (40); und
Anzeigen, durch das elektronische Gerät (100), erster Hinweisinformationen in der Benutzeroberfläche für eingehende Anrufe (40), wenn der eingehende Anruf nicht beantwortet wird, wobei die ersten Hinweisinformationen dazu auffordern, durch doppeltes Drücken der Leiser-Taste die Aktivierung der ersten Funktion auszulösen.

9. Das Verfahren nach einem der Ansprüche 7 bis 8, wobei das Verfahren nach dem Aktivieren der ersten Funktion ferner umfasst:
Anzeigen, durch das elektronische Gerät (100), zweiter Hinweisinformationen in der Benutzeroberfläche für eingehende Anrufe (40), wobei die zweiten Hinweisinformationen darauf hinweisen, dass die erste Funktion aktiviert wurde.

10. Das Verfahren nach einem der Ansprüche 7 bis 9, ferner umfassend:
Stummschalten, durch das elektronische Gerät (100), eines Klingeltons für eingehende Anrufe als Reaktion auf eine Betätigung durch doppeltes Drücken der Leiser-Taste durch den Benutzer.

11. Das Verfahren nach einem der Ansprüche 7 bis 10, ferner umfassend:
Empfangen, durch das elektronische Gerät (100), eines dritten eingehenden Anrufs;
Stummschalten, durch das elektronische Gerät (100), eines Klingeltons für eingehende Anrufe als Reaktion auf den Empfang einer Betätigung durch Drücken der Leiser-Taste durch den Benutzer; und
Anzeigen, durch das elektronische Gerät (100), eines Lautstärkeleistensymbols in der Benutzeroberfläche für eingehende Anrufe (40) als Reaktion auf eine erneute Betätigung durch Drücken der Leiser-Taste durch den Benutzer, wobei das Lautstärkeleistensymbol die vom System des elektronischen Geräts (100) eingestellte Anruflautstärke darstellt.

12. Das Verfahren nach Anspruch 11, wobei das Verfahren nach dem Anzeigen, durch das elektronische Gerät (100), eines Lautstärkeleistensymbols in der Benutzeroberfläche für eingehende Anrufe (40) ferner umfasst:
Anpassen, durch das elektronische Gerät (100), der Anruflautstärke als Reaktion auf eine Betätigung des Lautstärkeleistensymbols durch den Benutzer; und
Aktivieren der ersten Funktion, wenn die angepasste Lautstärke eine erste Anruflautstärke ist; oder
Deaktivieren der ersten Funktion, wenn die eingestellte Lautstärke eine zweite Anruflautstärke ist, wobei
die erste Anruflautstärke geringer ist als die zweite Anruflautstärke.

13. Verfahren nach einem der Ansprüche 7 bis 12, ferner umfassend:
Empfangen eines vierten eingehenden Anrufs durch das elektronische Gerät (100), wenn die erste Funktion deaktiviert ist;
Anzeigen einer Anrufschnittstelle (45, 46, 50) durch das elektronische Gerät (100) als Reaktion darauf, dass der Anruf angenommen wird; und
Anzeigen des Lautstärkebalkensymbols in der Anrufschnittstelle (45, 46, 50) und Präsentieren einer Animationsführung sowie einer Textaufforderung, wobei die Animationsführung eine Abwärtsbewegung einer Lautstärkeregelungstaste im Lautstärkebalkensymbol umfasst und die Textaufforderung dazu auffordert, durch eine Lautstärke-verringern-Operation die erste Funktion zu aktivieren.

14. Verfahren nach einem der Ansprüche 7 bis 12, ferner umfassend:
Anzeigen eines Schaltsymbols der ersten Funktion durch das elektronische Gerät (100) in einer Benachrichtigungsschnittstelle für eingehende Anrufe (40), einer Schnittstelle für ausgehende Anrufe oder einer Anrufschnittstelle (45, 46, 50);
Aktivieren der ersten Funktion durch das elektronische Gerät (100) als Reaktion auf den Empfang einer Tipp-Operation des Benutzers auf das Schaltsymbol; und
Deaktivieren der ersten Funktion durch das elektronische Gerät (100) als Reaktion auf den erneuten Empfang einer Tipp-Operation des Benutzers auf das Schaltsymbol.

## Revendications

1. Un procédé de contrôle d'appel, appliqué à un dispositif électronique (100), dans lequel le dispositif électronique (100) comprend un récepteur (101, 370B), un écran, et un appareil de production sonore d'écran (104, 396), l'appareil de production sonore d'écran (104, 396) est configuré pour entraîner l'écran à effectuer une production sonore d'écran, et le procédé comprend :
la réception (S102-S104), par le dispositif électronique (100), d'un premier appel entrant lorsqu'un volume d'appel défini par un système du dispositif électronique (100) est un premier volume ;
la réception (S109, S110, S111-S114), par le dispositif électronique (100), d'une première opération par un utilisateur, et la réponse au premier appel entrant en réponse à la première opération, et l'émission, par le récepteur (101, 370B) et l'appareil de production sonore d'écran (104, 396) du dispositif électronique (100), d'un premier son selon un premier rapport et au premier volume ;
la réception, par le dispositif électronique (100) pendant le premier appel entrant, d'une deuxième opération par l'utilisateur, et l'émission, par le récepteur (101, 370B) et l'appareil de production sonore d'écran (104, 396), d'un deuxième son selon un deuxième rapport et à un deuxième volume en réponse à la deuxième opération, dans lequel le deuxième volume est supérieur au premier volume ;
la réception, par le dispositif électronique (100), d'une troisième opération par l'utilisateur, et la fin du premier appel entrant en réponse à la troisième opération ;
la réception, par le dispositif électronique (100), d'un deuxième appel entrant lorsque le volume d'appel défini par le système du dispositif électronique (100) est le deuxième volume ; et
la réception, par le dispositif électronique (100), d'une quatrième opération par l'utilisateur, et la réponse au deuxième appel entrant en réponse à la quatrième opération, et l'émission, par le récepteur (101, 370B) et l'appareil de production sonore d'écran (104, 396) du dispositif électronique (100), d'un troisième son selon un troisième rapport et à un troisième volume, dans lequel le troisième volume est supérieur au premier volume, et le troisième volume est inférieur au deuxième volume, dans lequel
le premier rapport, le deuxième rapport et le troisième rapport sont respectivement des valeurs de rapport de l'intensité sonore du récepteur (101, 370B) sur l'intensité sonore de l'appareil de production sonore d'écran (104, 396), dans lequel
le premier rapport est inférieur au deuxième rapport, et le troisième rapport est inférieur au deuxième rapport.

2. Le procédé selon la revendication 1, dans lequel après l'émission, par le récepteur (101, 370B) et l'appareil de production sonore d'écran (104, 396) du dispositif électronique (100), d'un troisième son selon un troisième rapport et à un troisième volume, le procédé comprend en outre :
émission, par le récepteur (101, 370B) et l'appareil de production sonore d'écran (104, 396) du dispositif électronique (100), du troisième son selon le troisième rapport et au troisième volume lorsqu'une amplitude d'un son ambiant dans lequel le dispositif électronique (100) est situé est une première valeur ; et
émission, par le récepteur (101, 370B) et l'appareil de production sonore d'écran (104, 396) du dispositif électronique (100), d'un quatrième son selon un quatrième rapport et à un quatrième volume lorsque l'amplitude du son ambiant dans lequel le dispositif électronique (100) est situé est une seconde valeur, dans lequel
la première valeur est inférieure à la seconde valeur, le troisième rapport est différent du quatrième rapport, et le troisième volume est inférieur au quatrième volume.

3. Procédé selon la revendication 1 ou 2, dans lequel avant la réception, par le dispositif électronique (100), d'un premier appel entrant, le procédé comprend en outre :
l'activation d'une première fonction par défaut après la mise sous tension du dispositif électronique (100), dans lequel
lorsque la première fonction est activée, l'intensité sonore du récepteur (101, 370B) est inférieure à l'intensité sonore de l'appareil de production sonore d'écran (104, 396) après qu'un appel entrant ou un appel sortant a été répondu.

4. Procédé selon l'une quelconque des revendications 1 à 3, dans lequel la seconde opération est une opération d'appui sur un bouton physique d'augmentation du volume par l'utilisateur ou une opération de glissement d'un bouton de réglage du volume dans une icône de barre de volume vers le haut par l'utilisateur.

5. Procédé selon l'une quelconque des revendications 1 à 4, dans lequel
un volume de sortie du dispositif électronique (100) est représenté par une valeur de décibels de volume ; ou
le volume de sortie du dispositif électronique (100) est représenté par un niveau de volume, où des valeurs de décibels de volume à l'intérieur d'une plage prédéfinie sont divisées en N niveaux de volume, les N niveaux de volume sont en correspondance biunivoque avec N valeurs de décibels, et N est un entier positif, dans lequel
les N niveaux de volume comprennent un niveau de volume 1 à un niveau de volume 10, où les niveaux de volume correspondant respectivement au premier volume et au troisième volume tombent dans une plage de [niveau (101) 1, niveau (101) I], et les volumes correspondant respectivement au second volume et au quatrième volume tombent dans une plage de [niveau (101) I+1, niveau (101) 10], où I est un entier supérieur à 1 et inférieur à 10.

6. Procédé selon la revendication 5, dans lequel une valeur de I est fixée à 8.

7. Procédé selon la revendication 1, comprenant en outre :
activation, par le dispositif électronique (100), d'une première fonction en réponse à une opération de double pression sur un bouton de réduction du volume par un utilisateur, dans laquelle la première fonction consiste en ce que l'intensité sonore du récepteur (101, 370B) est inférieure à l'intensité sonore de l'appareil de production sonore d'écran (104, 396) ; et
activation, par le dispositif électronique (100), de la première fonction en réponse à une opération de double pression sur le bouton de réduction du volume par l'utilisateur.

8. Le procédé selon la revendication 7, dans lequel la réception, par le dispositif électronique (100), d'un premier appel entrant comprend :
l'affichage, par le dispositif électronique (100), d'une interface de notification d'appel entrant (40) ; et
l'affichage, par le dispositif électronique (100), d'une première information d'invite dans l'interface de notification d'appel entrant (40) lorsque l'appel entrant n'est pas répondu, dans laquelle la première information d'invite incite à déclencher, par une double pression sur le bouton de réduction du volume, l'activation de la première fonction.

9. Le procédé selon l'une quelconque des revendications 7 à 8, dans lequel après l'activation de la première fonction, le procédé comprend en outre :
l'affichage, par le dispositif électronique (100), d'une seconde information d'invite dans l'interface de notification d'appel entrant (40), dans laquelle la seconde information d'invite indique que la première fonction a été activée.

10. Le procédé selon l'une quelconque des revendications 7 à 9, comprenant en outre :
la mise en sourdine, par le dispositif électronique (100), d'une sonnerie d'appel entrant en réponse à une opération de double pression sur le bouton de réduction du volume par l'utilisateur.

11. Le procédé selon l'une quelconque des revendications 7 à 10, comprenant en outre :
la réception, par le dispositif électronique (100), d'un troisième appel entrant ;
la mise en sourdine, par le dispositif électronique (100), d'une sonnerie d'appel entrant en réponse à la réception d'une opération de pression sur le bouton de réduction du volume par l'utilisateur ; et
l'affichage, par le dispositif électronique (100), d'une icône de barre de volume dans l'interface de notification d'appel entrant (40) en réponse à une opération de pression sur le bouton de réduction du volume à nouveau par l'utilisateur, dans laquelle l'icône de barre de volume représente le volume d'appel défini par le système du dispositif électronique (100).

12. Le procédé selon la revendication 11, dans lequel après l'affichage, par le dispositif électronique (100), d'une icône de barre de volume dans l'interface de notification d'appel entrant (40), le procédé comprend en outre :
le réglage, par le dispositif électronique (100), du volume d'appel en réponse à une opération par l'utilisateur sur l'icône de barre de volume ; et
l'activation de la première fonction lorsque le volume réglé est un premier volume d'appel ; ou
désactiver la première fonction lorsque le volume ajusté est un second volume d'appel, dans lequel
le premier volume d'appel est inférieur au second volume d'appel.

13. Procédé selon l'une quelconque des revendications 7 à 12, comprenant en outre :
la réception, par le dispositif électronique (100), d'un quatrième appel entrant lorsque la première fonction est désactivée ;
l'affichage, par le dispositif électronique (100), d'une interface d'appel (45, 46, 50) en réponse à ce que l'appel est accepté ; et
l'affichage de l'icône de barre de volume dans l'interface d'appel (45, 46, 50) et la présentation d'un guide d'animation et d'une invite textuelle, dans lequel le guide d'animation comprend un mouvement vers le bas d'un bouton de réglage du volume dans l'icône de barre de volume, et l'invite textuelle invite à déclencher, par une opération de diminution du volume, l'activation de la première fonction.

14. Procédé selon l'une quelconque des revendications 7 à 12, comprenant en outre :
l'affichage, par le dispositif électronique (100), d'une icône de commutation de la première fonction dans une interface de notification d'appel entrant (40), une interface d'appel sortant ou une interface d'appel (45, 46, 50) ;
l'activation, par le dispositif électronique (100), de la première fonction en réponse à la réception d'une opération de tapotement par l'utilisateur sur l'icône de commutation ; et
la désactivation, par le dispositif électronique (100), de la première fonction en réponse à la réception d'une nouvelle opération de tapotement par l'utilisateur sur l'icône de commutation.
